# EUROPEAN PATENT APPLICATION

(11) **EP 3 651 084 A1**
(43) Date of publication of application: **13.05.2020**
(21) Application number: 19207326.0
(22) Date of filing: 05.11.2019
(51) Int. Cl.: G06Q 10/00, G06Q 30/00, G06Q 30/06, G06Q 50/28

(54) **SYSTEMS AND METHODS FOR FACILITATING EQUIPMENT TRANSACTIONS THROUGH AN EQUIPMENT ONLINE MARKETPLACE PLATFORM**

(30) Priority: 09.11.2018 US 201862758237 P; 31.07.2019 US 201916527266
(71) Applicant: Honeywell International Inc., Morris Plains, NJ 07950 (US)
(72) Inventor: BUTTERS, Lisa Estipona, Morris Plains, NJ New Jersey 07950 (US); SOLIS, Matthew, Morris Plains, NJ New Jersey 07950 (US); MINYARD, Jason, Morris Plains, NJ New Jersey 07950 (US); HUMPHERYS, Grant, Morris Plains, NJ New Jersey 07950 (US); KAR, Satyanarayan, Morris Plains, NJ New Jersey 07950 (US); RAO, Sujay, Morris Plains, NJ New Jersey 07950 (US)
(74) Representative: Haseltine Lake Kempner LLP

(57) **Abstract**

A method for facilitating equipment transactions through an equipment online marketplace platform is disclosed. The method may include: hosting the platform through a network such that users can access the platform through the network; verifying identities of new users of the platform to generate verified users; enabling verified users to create listings for equipment on the platform; when a verified user creates a listing, determining whether the verified user has access to the equipment in the listing by requiring the user to upload one or more images or documents of the equipment through the platform; generating the verified user's listing on the platform when the verified user is determined to have access to the equipment; and displaying the generated listing on the platform such that other verified users can view the posted listing and conduct electronic transactions involving the equipment in the listing through the platform.

## Description

### TECHNICAL FIELD

Various embodiments of the present disclosure relate generally to online marketplace platforms and, more particularly, to systems and methods for facilitating equipment transactions through an equipment online marketplace platform.

### BACKGROUND

Traditionally, equipment, such as aerospace parts, may be bought and sold in primary and secondary safety-critical marketplaces. Such marketplaces typically include brochure inquiries, often relying on intermediaries which require buyers and sellers to have several conversations to assess the accuracy of information/attributes tied to the equipment before a deal is made to sell the equipment. Today, approximately $4 billion of aerospace parts are traded annually throughout the world. However, less than 2% of the aerospace parts commerce is conducted through online marketplaces, such as e-commerce websites. In the aerospace industry, it is difficult to establish such online marketplaces because aerospace equipment trading is spread between several high assets, such as airlines, airports, aircrafts, and/or original equipment manufacturers (OEMs). For example, highly demanding time-constrained services, such as airport gates and runways, may be traded. However, there is currently no integrated equipment online marketplace that integrates these resources amongst the various participants (e.g., airlines, airports, aircrafts, and/or OEMs).

The present disclosure is directed to overcoming one or more of these above-referenced challenges.

### SUMMARY OF THE DISCLOSURE

In one aspect, a computer-implemented method for facilitating equipment transactions through an equipment online marketplace platform is disclosed. The method may include: hosting, by a server, the equipment online marketplace platform through a network such that users can access the equipment online marketplace platform through the network; verifying, by the server, identities of new users of the equipment online marketplace platform to generate verified users; enabling, by the server, verified users to create listings for equipment on the equipment online marketplace platform; when a verified user creates a listing for equipment, determining, by the server, whether the verified user has access to the equipment in the created listing by requiring the user to upload one or more images or documents of the equipment through the equipment online marketplace platform; generating, by the server, the verified user's listing for the equipment on the equipment online marketplace platform when the verified user is determined to have access to the equipment; and displaying, by the server, the generated listing for the equipment on the equipment online marketplace platform such that other verified users can view the posted listing and conduct electronic transactions involving the equipment in the listing through the equipment online marketplace platform.

In another aspect, a computer system for facilitating equipment transactions through an equipment online marketplace platform is disclosed. The computer system may include: a memory having processor-readable instructions stored therein; and at least one processor configured to access the memory and execute the processor-readable instructions, which when executed by the at least one processor configures the at least one processor to perform a plurality of functions, including functions for: hosting, by a server, the equipment online marketplace platform through a network such that users can access the equipment online marketplace platform through the network; verifying, by the server, identities of new users of the equipment online marketplace platform to generate verified users; enabling, by the server, verified users to create listings for equipment on the equipment online marketplace platform; when a verified user creates a listing for equipment, determining, by the server, whether the verified user has access to the equipment in the created listing by requiring the user to upload one or more images or documents of the equipment through the equipment online marketplace platform; generating, by the server, the verified user's listing for the equipment on the equipment online marketplace platform when the verified user is determined to have access to the equipment; and displaying, by the server, the generated listing for the equipment on the equipment online marketplace platform such that other verified users can view the posted listing and conduct electronic transactions involving the equipment in the listing through the equipment online marketplace platform.

In yet another aspect, a non-transitory computer-readable medium containing instructions for facilitating equipment transactions through an equipment online marketplace platform is disclosed. The instructions may include instructions for: hosting, by a server, the equipment online marketplace platform through a network such that users can access the equipment online marketplace platform through the network; verifying, by the server, identities of new users of the equipment online marketplace platform to generate verified users; enabling, by the server, verified users to create listings for equipment on the equipment online marketplace platform; when a verified user creates a listing for equipment, determining, by the server, whether the verified user has access to the equipment in the created listing by requiring the user to upload one or more images or documents of the equipment through the equipment online marketplace platform; generating, by the server, the verified user's listing for the equipment on the equipment online marketplace platform when the verified user is determined to have access to the equipment; and displaying, by the server, the generated listing for the equipment on the equipment online marketplace platform such that other verified users can view the posted listing and conduct electronic transactions involving the equipment in the listing through the equipment online marketplace platform.

Additional objects and advantages of the disclosed embodiments will be set forth in equipment in the description that follows, and in equipment will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts a block diagram of a system for an equipment online marketplace platform, according to aspects of the disclosure.
FIG. 2 depicts a system architecture of the equipment online marketplace platform of FIG. 1, according to aspects of the disclosure.
FIG. 3 depicts a flowchart of a method for facilitating equipment transactions through the equipment online marketplace platform of FIGs. 1 and 2.
FIG. 4 depicts an exemplary registration page of the equipment online marketplace platform of FIGs. 1 and 2.
FIGS. 5A and 5B depict an exemplary sign in page of the equipment online marketplace platform of FIGs. 1 and 2.
FIGS. 6A and 6B depict a search feature for non-members of the equipment online marketplace platform of FIGs. 1 and 2.
FIG. 7 depicts an exemplary search feature for registered users of the equipment online marketplace platform of FIGs. 1 and 2.
FIG. 8 depicts an exemplary search results page on the equipment online marketplace platform of FIGs. 1 and 2.
FIGS. 9A-9C depict an exemplary listing details page of the equipment online marketplace platform of FIGs. 1 and 2.
FIGS. 10A-10C depict an exemplary cart and checkout feature of the equipment online marketplace platform of FIGs. 1 and 2.
FIGS. 11 and 12 depict an exemplary order notification feature of the equipment online marketplace platform of FIGs. 1 and 2.
FIGS. 13A-13C depict an exemplary share listing feature of the equipment online marketplace platform of FIGs. 1 and 2.
FIGS. 14A-14D depict an exemplary conversation feature for buyers on the equipment online marketplace platform of FIGs. 1 and 2.
FIGS. 15A-15D depict an exemplary conversation feature for sellers on the equipment online marketplace platform of FIGs. 1 and 2.
FIGS. 16A-16C depict an exemplary seller price quote feature on the equipment online marketplace platform of FIGs. 1 and 2.
FIGS. 17-20 depict various exemplary seller services features of the equipment online marketplace platform of FIGs. 1 and 2.
FIG. 21 depicts an exemplary ratings feature on the equipment online marketplace platform of FIGs. 1 and 2.
FIG. 22 depicts an exemplary technical support feature on the equipment online marketplace platform of FIGs. 1 and 2.
FIG. 23 depicts a high-level functional block diagram of an exemplary computer device or system, in which embodiments of the present disclosure, or portions thereof, may be implemented.

### DETAILED DESCRIPTION

The following embodiments describe systems and methods for providing an equipment online marketplace for trading equipment, such as aerospace parts. As used herein, "equipment" may include products or services traded in primary and secondary marketplaces among organizations. As such, "equipment" may include, for example, aircraft, aerospace parts and components, time-constrained services such as airport gates and runways, or any other aerospace-related product or service traded among airlines, airports, aircraft, or aerospace OEMs. While the exemplary equipment online marketplace platform of the present disclosure relates to aerospace parts, "equipment" may also include any type of vehicle (e.g., automobile, boat, spacecraft, etc.), vehicle parts and components, vehicle services, heavy equipment, heavy equipment parts and components, heavy equipment services, computing devices, computing device parts and components, computing device services, or any other products or services traded in primary and secondary marketplaces among organizations.

As described above, it is difficult to establish an equipment online marketplace for equipment, such as aerospace parts, because equipment trading may be distributed between several high asset organizations. Embodiments of the present disclosure provide solutions to these barriers by providing an equipment online marketplace platform for facilitating equipment transactions by establishing trust among users (e.g., buyers and sellers). For example, the equipment online marketplace platform may establish trust among users by verifying identities of users. The equipment online marketplace platform may further verify that sellers have access to the physical equipment being listed on the equipment online marketplace platform by requiring sellers to upload at least one image of the equipment, quality documents for the equipment, and pricing information for the equipment. Further, embodiments of the present disclosure provide for an equipment online marketplace platform having various features for facilitating transactions of equipment among sellers and buyers. The various features may include features in different categories. The categories of features of the equipment online marketplace platform for trading equipment may include search, listing layout, listing details, organization, communication, seller services, orders, registration, account profile management, support, and rating features. These features will each be described in more detail below.

The subject matter of the present disclosure will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in equipment.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

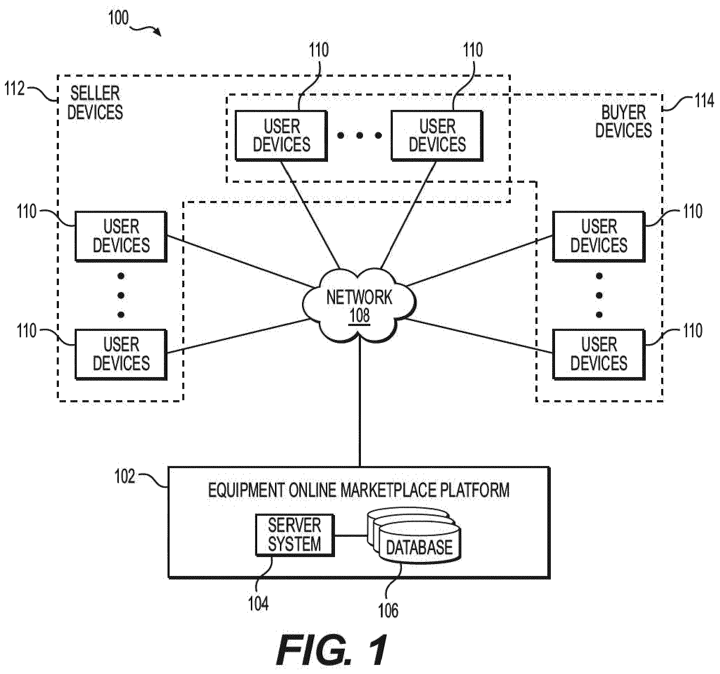

Referring now to the appended drawings, FIG. 1 depicts a block diagram of a system 100 for an equipment online marketplace, according to aspects of the disclosure. As shown in FIG. 1, the system 100 for an equipment online marketplace may include an equipment online marketplace platform 102, such as an aerospace parts online marketplace platform, including server systems 104 and one or more databases 106, including shared databases. The server systems 104 may store and execute the equipment online marketplace platform 102 for use through a network 108, such as the Internet. The equipment online marketplace platform 102 may be implemented through one or more server systems 104, such as an application program interface (API) server, web page servers, image servers, listing servers, processing servers, search servers, or any other types of front-end or back-end servers.

Users may access the equipment online marketplace platform 102 through the network 108 by user devices 110. User devices 110 may allow a user to display a Web browser for accessing the equipment online marketplace platform 102 from the server system 104 through the network 108. The user devices 110 may be any type of device for accessing Web pages, such as personal computing devices, mobile computing devices, or the like. User devices 110 may be seller devices 112 or buyer devices 114. As such, users may be sellers and/or buyers through the equipment online marketplace platform 102. As further shown in FIG. 1, user devices 110 may be both seller devices 112 and buyer devices 114. Thus, users may access the equipment online marketplace platform 102 as both sellers and buyers.

Further, the equipment online marketplace platform 102 may provide a seller interface and a buyer interface. The seller interface may be displayed to a user accessing the equipment online marketplace platform 102 as a seller on a user device 110. The seller interface may include features to enable a seller to enter, or input, the information of the equipment that the seller desires to sell through the equipment online marketplace platform 102. For example, the seller interface may allow a seller to create, edit, or delete equipment listings based on the information of corresponding equipment. The buyer interface may be displayed to a user accessing the equipment online marketplace as a buyer on a user device 110. The buyer interface may include features to enable a buyer to search for, select, and purchase equipment from an equipment listing created by a seller. As discussed above, the equipment online marketplace platform may facilitate equipment transactions using various features, as further described below.

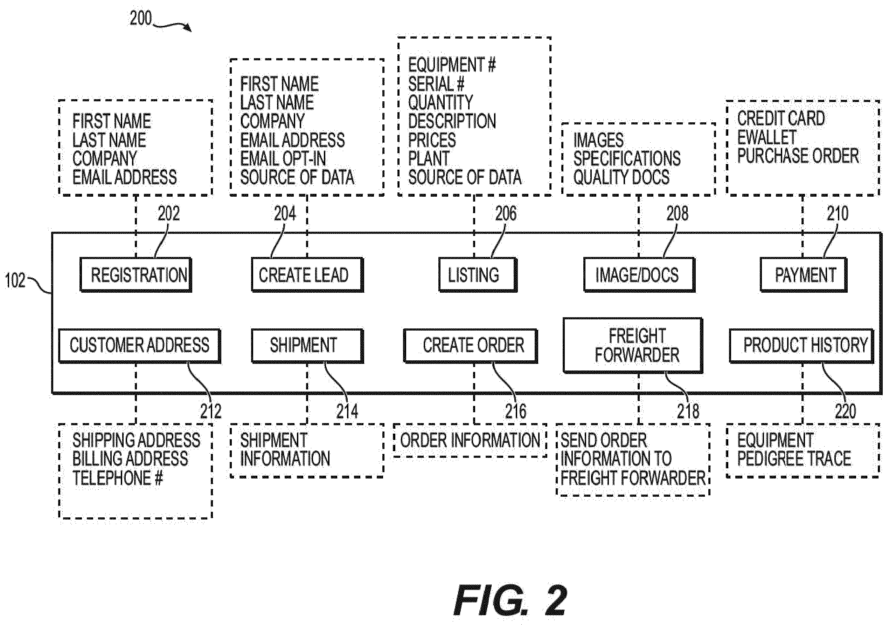

FIG. 2 depicts an exemplary system architecture 200 of the equipment online marketplace platform 102, according to aspects of the disclosure. As shown in FIG. 2, system architecture 200 of the equipment online marketplace platform 102 may include various software modules 202-220 implemented on the server system 104 for executing functions of the equipment online marketplace platform 102. For example, software modules 202-220 may be executed by a processor of server system 104. The software modules may include a registration module 202, a create lead module 204, a listing module 206, an images/docs module 208, a payment module 210, a customer address module 212, a shipment module 214, a create order module 216, a freight forwarder module 218, a product history module 220, or any other software modules for executing the equipment online marketplace platform 102 on the server system 104.

The registration module 202 may enable new users to register new accounts on the equipment online marketplace platform 102. For example, new users may enter identity information, such as first name, last name, company or organization name, and email address. Server 104 may receive and process the identity information to enable new users to create an account on the equipment online marketplace platform 102. Further, server 104 may verify identities of new users based on the identity information to generate verified users of the platform 102, as further detailed below.

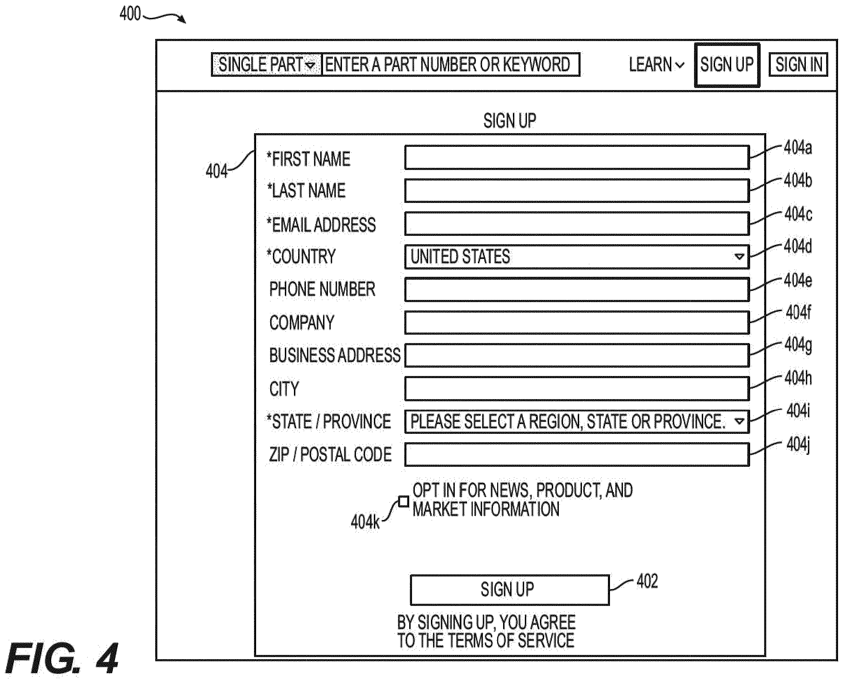

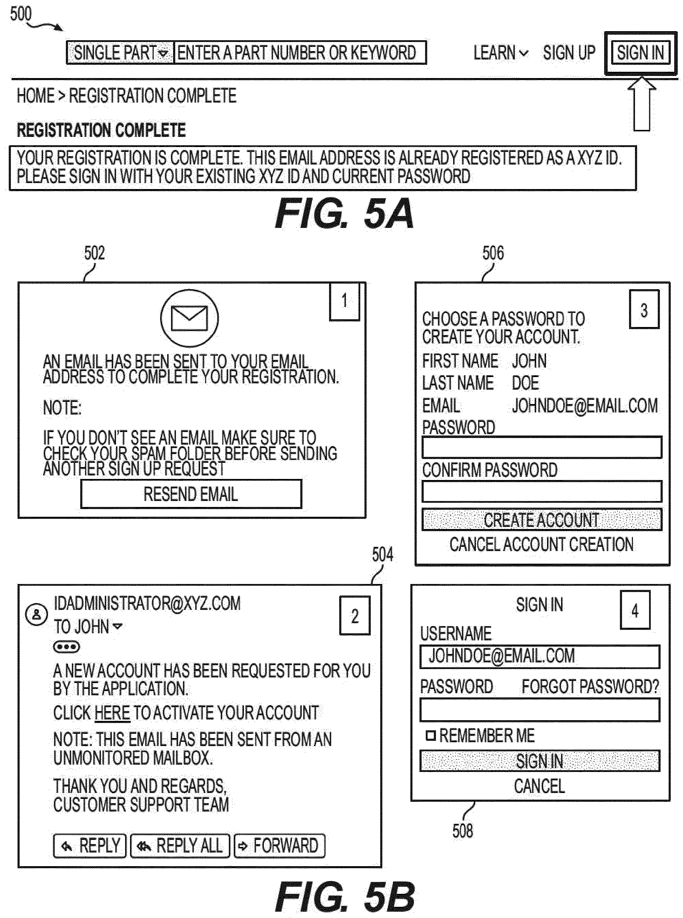

The create lead module 204 may create a new lead based on the received identity information through the registration module 202. For example, the databases 106 may include a lead database such that server 104 may create and store records of verified users of the equipment online marketplace platform 102 in the lead database. Each record for each verified user in the lead database may include, for example, the identity information received from the registration module 202 (first name, last name, company, email address). Each record may further include a binary answer for email opt-in to indicate whether the user opted to receive periodic emails (e.g., news, promotions, product, and market information, etc.) from server 104 via the equipment online marketplace platform 102. The registration module 202 and the create lead module 204 are detailed further below with reference to FIGs. 4 and 5A-5B.

The listing module 206 may enable verified users to create a listing for equipment on the equipment online marketplace platform 102. For example, server 104 may receive input from a verified user through the equipment online marketplace platform 102 to create the listing. The input may include information of the equipment to identify the equipment. The information may include, for example, equipment number (e.g., part number), serial number, quantity, description, prices, plant location, or any other relevant information for identifying the equipment. Server 104, via listing module 206, may generate a listing for the equipment and display the generated listing on the equipment online marketplace platform 102. Prior to enabling a verified user to create the listing, server 104 may determine whether the verified user has access to the equipment in the created listing by requiring the verified user to upload one or more images or documents of the equipment through the equipment online marketplace platform 102, as further detailed below.

The images/docs module 208 may store, process, and display the one or more images or documents for the equipment online marketplace platform 102. For example, server 104 may receive the one or more images or documents of the equipment. In one embodiment, the one or more images or documents may include at least one image of the equipment, specification documents including information of the equipment, and/or quality documents of the equipment. Once server 104 receives the one or more images or documents of the equipment, server 104 may process the one or more images or documents to determine that the verified user has access to the equipment. Server 104 (via listing module 206), may then generate the verified user's listing for the equipment on the equipment online marketplace platform 102 when the verified user is determined to have access to the equipment. Server 104 may display the generated listing for the equipment on the equipment online marketplace platform 102 such that other users can view the generated listing and conduct electronic transactions involving the equipment in the listing (e.g., purchasing the equipment) through the equipment online marketplace platform 102.

The payment module 210 may receive and process payment information for the equipment in the listing. For example, server 104 may receive payment information input by a user through the equipment online marketplace platform 102. The payment information may include credit card information, eWallet information, and/or purchase order information. Server 104 may verify the payment information, as is known in the art.

The customer address module 212 may receive, store, and process address information of the user purchasing the equipment in the listing. For example, server 104 may receive input from the user purchasing the equipment of address information, including shipping address, billing address, and telephone number. The address information may further include name, street, city, region, postal code, country, search term, sales organization, division, record ID, default partner information, company or organization name, street information of company or organization address, location, district, post office box number, postal code, city, foreign country information, customer group information, price group information, email address, and/or fax number.

The shipment module 214 may receive the shipping information and create a shipment for the equipment. For example, server 104 (via the shipment module) may send the shipping information to a shipping partner to create a shipment for the equipment.

The create order module 216 may create orders for the equipment that has been purchased. For example, server 104 may use the payment information, the shipping information, and the billing information to create an order for the equipment. Server 104 may generate an order number for the order and send a copy of the order information (such as an order form with the order number) to the user purchasing the equipment (e.g., via email).

The freight forwarder module 218 may send order information to a freight forwarder. As used herein, a "freight forwarder" is a person or company that organizes shipments for individuals or organizations to ship goods from the organization (manufacturer, producer, etc.) to a customer (e.g., the user that purchases the equipment). For example, server 104 may send the order information and shipping information to the freight forwarder for shipping the equipment to the user that purchased the equipment.

The product history module 220 may include an equipment pedigree trace. For example, server 104 may retrieve and display history information related to the equipment from a blockchain entry for the equipment in the shared database 106 of the equipment online marketplace platform 102. Server 104 may display the equipment pedigree trace in a listing for the equipment. The history information may include, for example, shipping history of the equipment (including equipment location and relocation date), ownership information (including change of ownership) of the equipment, type of service (e.g., maintenance performed on the equipment), service date, service center, service life. When the equipment includes vehicle parts, the history information may include vehicle update date, vehicle serial number, and installed/removed date.

The modules 202-220 of the equipment online marketplace platform 102 may each be implemented in various environments. The various environments for implementing the modules 202-220 may include, for example, Apigee, SAP, Marketo, Magento, CWA/SSO, and/or eWallet.

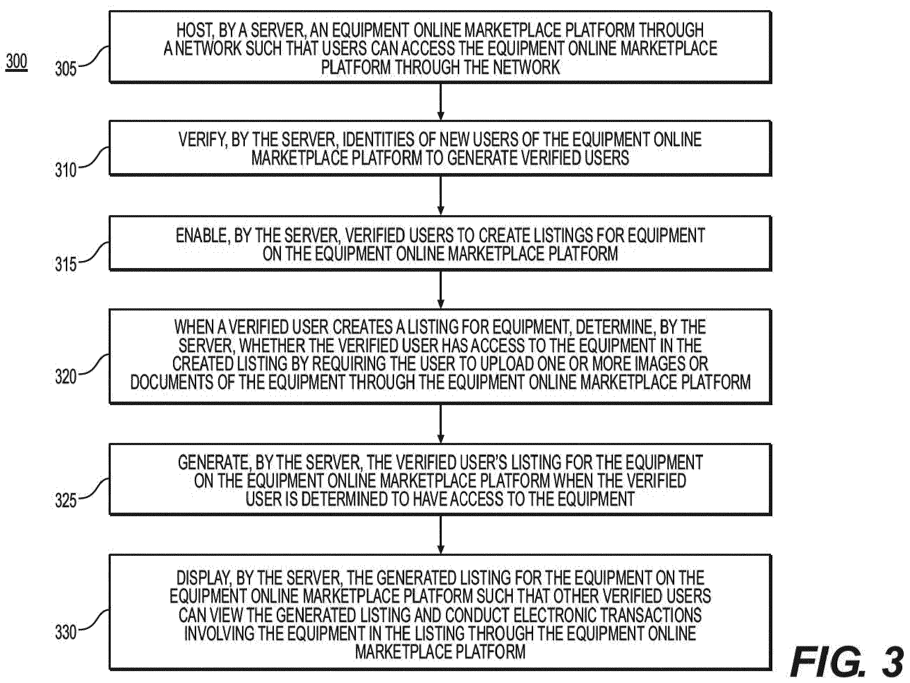

FIG. 3 depicts a flowchart of a method 300 for facilitating equipment trading through the equipment online marketplace platform 102. In an initial step 305, server 104 may host the equipment online marketplace platform 102 through network 108 such that users (via user devices 110) can access the equipment online marketplace platform 102 through the network 108.

In step 310, server 104 may verify identities of new users of the equipment online marketplace platform 102 to generate verified users. In one embodiment, verifying identities of new users may include server 104 sending a message with a verification hyperlink to a respective new user. Server 104 may verify an identity of the respective new user when the respective new user opens the hyperlink. Server 104 may then generate a verified new user by storing the verified identity of the respective new user in shared database 106. In one embodiment, server 104 may enable organizations to register as a new user on the equipment online marketplace platform 102 and/or enable individuals to register as a new user on the equipment online marketplace platform 102.

In one embodiment, verifying identities of new users may further include server 104 receiving identity information of the new user and determining whether the new user is associated with an organization that is registered with the equipment online marketplace platform 102 based on the received identity information of the new user. If the new user is associated with an organization that is registered with the equipment online marketplace platform 102, the server 104 may associate the new user to the organization by linking a new user account to the organization through the equipment online marketplace platform 102 after the identity of the new user has been verified. If the new user is not associated with an organization that is registered with the equipment online marketplace platform 102, the server 104 may enable the new user to conduct electronic transactions involving the equipment through the equipment online marketplace platform 102 independently from any organizations after the identity of the new user has been verified.

In one embodiment, the received identity information of the new user may include a country of residence for the new user. Server 104 may verify identities of new users by comparing the country of residence for the new user to a list of countries that are embargoed. If the country of residence for the new user matches a country on the list of countries that are embargoed, server 104 may block the new user from accessing the equipment online marketplace platform 102. In one embodiment, the verifying identities of new users of the equipment online marketplace platform 102 may include server 104 comparing the received identity information of the new user to identity information in one or more governmental databases. If the received identity information of the new user matches identity information in the one or more governmental databases, server 104 may block the new user from accessing the equipment online marketplace platform 102.

In step 315, server 104 may enable verified users to create listings for equipment on the equipment online marketplace platform 102.

In step 320, when a verified user creates a listing for equipment, server 104 may determine whether the verified user has access to the equipment in the created listing by requiring the user to upload one or more images or documents of the equipment through the equipment online marketplace platform 102. For example, the uploaded one or more images or documents of the equipment may include at least one image of the equipment, quality information from one or more quality documents for the equipment, and pricing information for the equipment.

In step 325, server 104 may generate the verified user's listing for the equipment on the equipment online marketplace platform 102 when the verified user is determined to have access to the equipment. In one embodiment, the generated listing may include the at least one image of the equipment, the one or more quality documents for the equipment, and the pricing information for the equipment.

In step 330, server 104 may display the generated listing for the equipment on the equipment online marketplace platform 102 such that other verified users can view the generated listing and conduct electronic transactions involving the equipment in the listing through the equipment online marketplace platform 102.

Various exemplary features of the equipment online marketplace platform 102 will now be described in more detail with reference to FIGs. 4-22.

FIG. 4 depicts an exemplary registration page 400 of the equipment online marketplace platform 102. Server may implement the registration page 400 via the registration module 202 on the equipment online marketplace platform 102. The registration page 400 may include a sign up button 402. To sign up for the equipment online marketplace platform 102, a new user may select (click or press) the sign up button 402 from a header menu. The new user may fill out a registration form 404 and select the sign up button 402 to create a new user profile. The registration form 404 may include fields to enable the new user to input identity information. Server 104 may receive the input identity information through registration module 202, detailed above. In the exemplary embodiment, the registration form 404 may include fields 404a-404j for entering identity information, such as a first name field 404a, last name field 404b, email address field 404c, country field 404d, phone number field 404e, company field 404f, business address field 404g, city field 404h, state/province field 404i, zip/postal code field 404j, and/or an opt-in for news, products, and market information check box 404k. It is understood that the registration form 404 may include any fields necessary for obtaining identity information of the user to create a new user profile and register on the equipment online marketplace platform 102. Companies/organizations may register for a new account or individual users may register for a new account.

After server 104 receives the input identity information, server 104 may automatically screen the new user to allow the new user to register a new account on platform 102. For example, server 104 (via registration module 202) may receive country information of the new user via the country field 404d of registration form 404. Server 104 may compare the received country information to a list of countries that are embargoed. The list of countries that are embargoed may be stored in the one or more databases 106. If the country information matches a country in the list of countries that are embargoed, server 104 may block the new user from using platform 102. Further, server 104 may compare the new user identity information to one or more governmental databases of known offenders. If the new user identity information matches identity information in the one or more governmental databases, server 104 may block the new user from accessing platform 102. The one or more governmental databases may include, for example, an International Trade Compliance database.

The registration module 202 may further include a create new free account feature, a create new paid account feature, an electronic payment for seller fees feature, seller warehouse registration feature, a buyer and seller verification feature, an accredited vendor program feature, a display company profile feature, and an onboard training feature. The create new free account feature may include terms, conditions, subscription type, and an email confirmation for account creation. The free account on the equipment online marketplace platform 102 may allow the user to access only certain features of the platform. For example, the free account user may have some basic search capability, but may not see vendor or other certain information and may not be able to transact through the equipment online marketplace platform 102. The create new paid account feature may include terms, conditions, subscription type, an email confirmation for account creation. The paid account user may create a user profile, select basic or premium subscription, identify as a seller, a buyer, or both. The paid account user may also transact through the equipment online marketplace platform 102 and submit payment through the portal using credit card or other payment methods.

The electronic payment for seller fees feature may include charging a seller a subscription fee for using the equipment online marketplace platform 102. For example, a seller may be charged either by a subscription fee that may be renewed each year or by a fixed amount for each listing uploaded and a percentage transaction fee (e.g., 2%) for every transaction sold through the equipment online marketplace platform 102. Further, sellers may be able to securely store payment information, such as credit card information, for auto-payment of the transaction fees. The seller warehouse registration feature may include warehouse location selection and addition. For example, a seller may select a "ship from" warehouse location from which the goods are shipped. A seller may have the option to select multiple warehouse locations for additional subscription fees. The buyer and seller verification feature may include server 104 performing a credit and/or financial report (e.g., a Dun & Bradstreet (D&B) report) on the buyer and/or seller prior to the buyer and/or seller being able to register with the equipment online marketplace platform 102. The accredited vendor program may include preferred buyers and sellers. Buyers and sellers may each have a rating based on platform usage history. Buyers and sellers may earn preferred or approved vendor status with thousands of buyers by, for example, displaying certificates, policies, buyer feedback and key performance indicators (KPIs). The display company profile feature may include displaying the company profile and user profiles by an administrator of the company through the equipment online marketplace platform 102. The onboard training feature may include training services for teaching users how to use the equipment online marketplace platform 102. The training services may be provided by, for example, WalkMe™.

FIGs. 5A and 5B depict an exemplary sign in page 500 of the equipment online marketplace platform 102. After registration, for employees of the platform 102 administrator, if the email address of the new user is already registered with the platform 102 administrator, the new user may use an existing platform administrator ID and password to sign in (as shown in FIG. 5A). New users without such an ID may need to verify their identity as shown in FIG. 5B. For example, server 104 may verify identities of new users of the equipment online marketplace platform 102 to generate verified users. The process of verifying the identities of new users may include server 104 sending an email 504 to the email address of a respective new user. For example, a notification 502 may inform the new user that an email has been sent to the email address provided via registration page 400. Server 104 may activate the account of the respective new user when the new user selects a link within the email 504, thus verifying an identity of the respective new user. Server 104 may then enable the respective new user to enter a new password and create a new account on a create account page 506. The new user may then sign into their account via sign on page 508.

In one embodiment, to verify identities of new users, server 104 may use smart contracts. As user herein, a "smart contract" is a computer code stored in the database 106 (e.g., a blockchain shared ledger) containing a set of pre-defined rules under which parties to the contract agree to interact with each other. When the pre-defined rules are met, the contract, or agreement, may be automatically enforced. For example, a new user may submit identity information of the new user through the equipment online marketplace platform 102, as detailed above.

After the new user submits identity information, server 104 (via the smart contract) may proceed to verify the information. For example, endorsing nodes (e.g., the organizations that are existing users of the equipment online marketplace platform 102) may verify the information. Upon receiving verification of certificate information from the smart contract, endorsing nodes may compute an invite code. The smart contract may then retrieve the new user email identification registered with the user. The smart contract may encrypt the invite code with a public certificate of the new user. The endorsing nodes may trigger a lead node (e.g., an accreditor) to send the encrypted invite code to the registered email of the new user. The new user may receive and decrypt the invite code. The new user may then submit a transaction that informs the smart contract that the new user has received the invite code. The endorsing nodes may then reference the database 106 (e.g., the blockchain shared ledger) to determine if the invite code in the new user transaction matches the invite code that the endorsing nodes sent to the new user. If the invite codes match, the new user may be registered with the equipment online marketplace platform 102. The identity information of the new user may be stored in the database 106 (e.g., the blockchain shared ledger). In one embodiment, server 104 may receive endorsements of an identity of a respective new user from existing users (endorsing nodes) of the equipment online marketplace platform 102 (for example by the process described above). If the identity of the new user is endorsed by a threshold number of existing users, server 104 may verify the identity of the new user. For example, if the identity of the new user is endorsed by 51% of existing users (endorsing nodes), server 104 may verify the identity of the new user.

Server 104 may enable the respective new user to sign in to the account with the email address and password (via sign on page 508) to access the equipment online marketplace platform 102. In one embodiment, account information for verified users may include a role of the verified user. For example, roles may include sellers and/or buyers of equipment on the equipment online marketplace platform 102. If the verified user is a seller, server 104 may enable the verified user to create listings for equipment on the equipment online marketplace platform 102. If the verified user is a buyer, server 104 may enable the verified user to view generated listings and conduct electronic transactions involving the equipment through the equipment online marketplace platform 102.

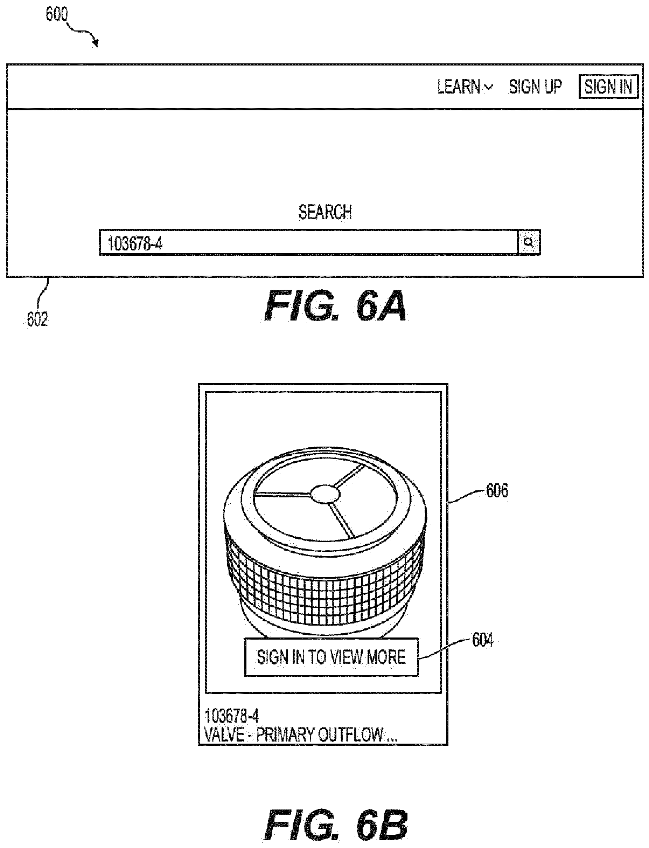

FIGS. 6A and 6B depict a search feature 600 for non-members of the equipment online marketplace platform 102 (e.g., users that have not been verified). For example, server 104 may receive input of a requested search from a non-member user via a search input field 602, process the requested search, and display relevant search results. A non-member user of the equipment online marketplace platform 102 may be allowed to use a limited search function for equipment (e.g., aerospace parts) as an anonymous user. Anonymous users are users that have not registered and signed in to the equipment online marketplace platform 102. The limited search function may allow the anonymous users to view details of the equipment, such as pricing, seller name, listing detail, and/or additional images and documents of the equipment. However, the anonymous user may be required to sign in to the equipment online marketplace platform 102 to view additional information of the equipment. As shown in FIG. 6B, the equipment online marketplace platform 102 may display a sign in to view more button 604 in a listing detail page 606 of the limited search.

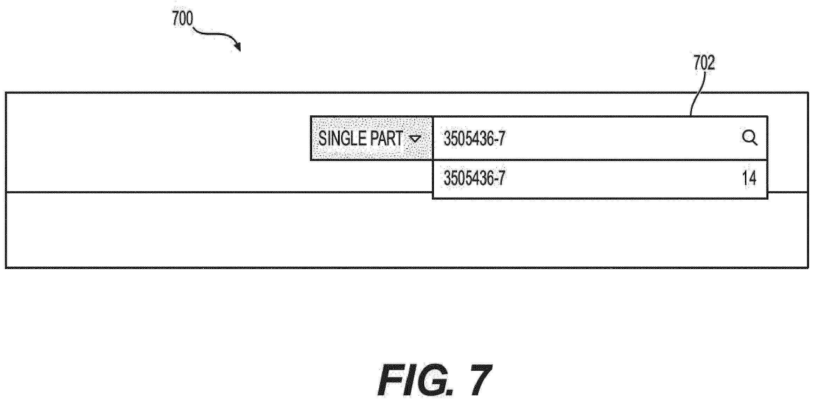

FIG. 7 depicts an exemplary search feature 700 for registered users (e.g., verified users) of the equipment online marketplace platform 102. Search feature 700 may include search features and a search by multiple equipment number lists feature. For example, server 104 may receive input of a search request (via search input field 702) through search feature 700 (from a registered user) and display respective search results through equipment online marketplace platform 102. The search feature 700 may include enabling a verified user to search various characteristics of the equipment. For example, a verified user may search by equipment number (e.g., part number), description, usage, platform, region, or any other characteristic to identify and find equipment listed on the equipment online marketplace platform. The search by multiple equipment number lists feature may allow a verified user to input multiple equipment numbers in search input field 702 on the equipment online marketplace platform 102. As such, multiple equipment numbers may be searched at one time in order to search for multiple equipment items at one time. Verified users may also be able to use the search feature to search by seller or equipment name/description. The search feature may also include a wildcard search for allowing a verified user to search by base part number. The search feature may further include a search auto-completion suggestions.

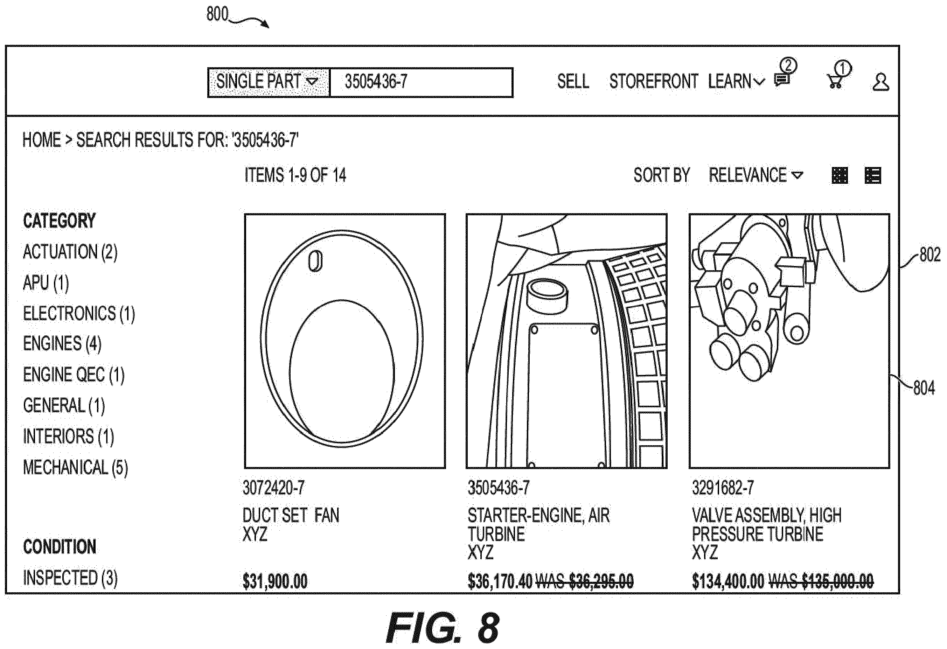

FIG. 8 depicts an exemplary search results page 800 on the equipment online marketplace platform 102. For example, server 104 may display search results through the equipment online marketplace platform 102 based on a search conducted through search feature 600 and/or search feature 700. As shown in FIG. 8, the exemplary search results page 800 may include a listing layout 802. The listing layout 802 may include a tile feature 804, a featured and/or sponsored listings feature, and an advertising layout. The tile feature 804 may display search results in a tile layout for ease of browsing for a user. Each tile 804 may display a default listing picture of the equipment, a price for the equipment, and/or a sales price (if any) for the equipment. If no price information is available for the equipment, the tile may display an offer button, a buy now button, and/or a request for quote button. Each tile may further display the equipment number (e.g., part number) for the equipment, a description of the equipment, seller name (e.g., XYZ company), a favorite button, and equipment reviews (if any). The featured and/or sponsored listings feature may include special recognition to certain listings, such as listed first or highlighted. Featured and/or sponsored listings may further include a sponsored tag and/or a sponsored banner displayed on the equipment online marketplace platform 102. Advertising layouts may include displaying an advertisement on the equipment online marketplace platform 102. Advertisements may be displayed, for example, as banners, popups, or the like. Further, search results may be filtered by a variety of options. For example, search results may be filtered by product category, condition, price, and/or seller, or any other option for filtering search results.

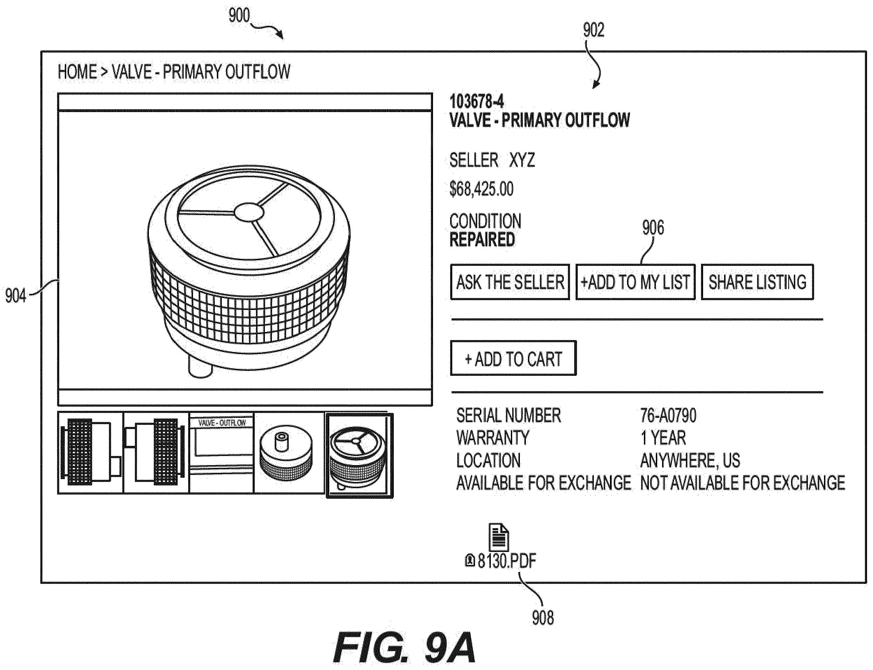

FIGS. 9A-9C depict an exemplary listing details page 900 of the equipment online marketplace platform 102. The listing details page 900 may be displayed when a verified user selects the listing tile 804 from the search results page 800. For example, server 104 may display the listing details page 900 (via the listing module 206) when a verified user selects the listing tile 804 from the search results page 800. The listing details page 900 may include a details section 902 (including details of the listing), an images pane 904, recommended alternative and/or similar products section, and favorites 906. When the equipment includes aerospace parts, the listing details page 900 may further include tag listing as aircraft-on-ground (AOG) features. The details section 902 may display, for example, equipment number (e.g., part number), description, seller name, price, condition, ask the seller, add to my list, share listing, serial number, warranty, location, available for exchange, additional images, documents 908, and/or product details. Listing details may include required information for the listing. For example, the equipment online marketplace platform 102 may require listings to include price and condition information, at least one photo 904 of the equipment, and quality documentation 908 (e.g., a FAA Form 8130) of the equipment uploaded via the images/docs module 208. When the verified user includes the required information, server 104 may determine the verified user has access to the equipment. Thus, server 104 may generate the verified user's listing for the equipment on the equipment online marketplace platform 102. Server 104 may display the generated listing for the equipment on the equipment online marketplace platform 102 such that other verified users can view the posted listing, as further detailed below.

In one embodiment, server 104 server may receive a spreadsheet document from a verified user through the equipment online marketplace platform 102. The spreadsheet document may contain identity information (e.g., data) of the equipment. Server 104 may extract the identity information from the spreadsheet document and process the extracted information. For example, server 104 may use a character recognition code, such as optical character recognition (OCR), to extract the information of the equipment from the spreadsheet document. Server 104 may automatically generate a listing for the equipment based on the identity information of the equipment in the spreadsheet document.

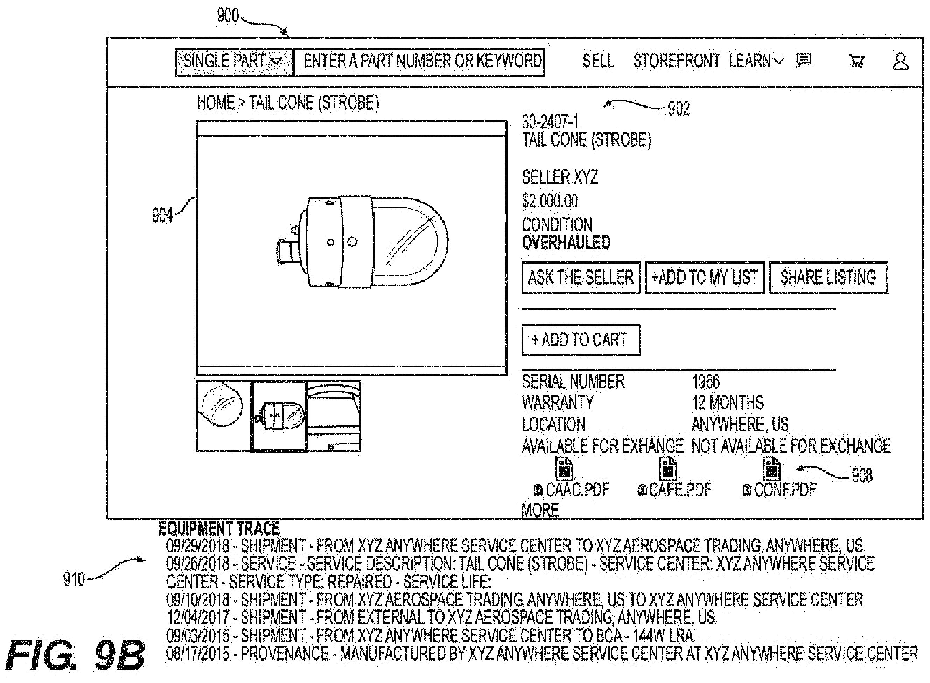

As shown in FIG. 9B, the listing details page 900 may further include an equipment trace section 910. For example, server 104 may display product history information of the equipment through the equipment online marketplace platform 102 in the equipment trace section 910. The equipment trace section 910 may display, for example, shipment dates and locations of the equipment, manufacture date of the equipment, ownership change information, service dates, type of service, service location, etc. The equipment trace may be supported by the shared database 106, such as a blockchain shared ledger. For example, verified users may register and create a digital identity of the equipment prior to listing the equipment for sale on the equipment online marketplace platform 102. A current owner of the equipment (e.g., a seller) may upload information of the physical equipment via the equipment online marketplace platform 102. As such, the physical equipment's attributes may be used to represent it in the digital world on the equipment online marketplace platform 102. A unique identity is created for the equipment and stored in the shared database 106 as a blockchain entry for the equipment, from where the unique identity of the equipment may be referenced for future use. Authenticity of the ownership of the equipment may be verified, such that the identity of the equipment and the records attached to the equipment may be trusted by other users. The unique identity of an aerospace part, for example, may include a part number, a serial number, an image of the part, a Form FAA 8130-3 for the part, among other information of the part or equipment.

Once a digital identity of the equipment is created on the equipment online marketplace platform 102, a history of the equipment may be established by users. For example, other users that are currently in possession of the equipment (e.g., shippers, maintenance technicians, etc.) may upload information of any action performed on the equipment. For example, all actions performed on the equipment, such as maintenance functions, may be stored in the shared ledger 106 as a blockchain entry for the equipment. Maintenance functions performed on the equipment may be verified by smart contracts. For example, the smart contract for the equipment may include a clause (or rule) for performing maintenance on the equipment by a set date. Server 104 may receive information related to the maintenance functions performed on the equipment and the smart contract may verify the information and determine that the maintenance occurred prior to the set date. Thus, server 104 may verify the maintenance functions by the smart contract.

As shown in FIG. 9B, the equipment trace section 910 may display the history of the maintenance functions performed on the equipment stored in the shared ledger 106. In one embodiment, the equipment trace section 910 for an aerospace part may include, for example, information such as part number, serial number, image of the art, Form FAA 8130-3 for the part, current owner of the part, maintenance steps performed on the part, or any other information related to tracing the history of the part or equipment.

In one embodiment, actions, or events, of the equipment may be sourced from multiple organizations that include users of the equipment online marketplace platform 102 from historical or live records. For example, a shipper may be authorized to submit shipping event transactions and information to the equipment online marketplace platform 102. The transaction and/or information may be endorsed by other organizations and the shipping status and information may be recorded in the shared ledger 106 as a blockchain entry for the equipment.

In one embodiment, the equipment trace section 910 may include a change in ownership of the equipment being recorded and accredited consensually using smart contracts. Current owners of the equipment may upload information regarding the change of ownership of the equipment. For example, the ownership of the equipment may be stored in the shared ledger 106 as a blockchain entry for the equipment. In one embodiment, a sales transaction between users (a seller and a buyer) may be submitted when a bill of sale is recorded on the equipment online marketplace platform 102. The transaction may be endorsed and the new ownership information (e.g., the buyer becomes the new owner the equipment) may be recorded to the blockchain entry for the equipment in the shared ledger 106. Thus, the current ownership may be displayed via the equipment trace section 910.

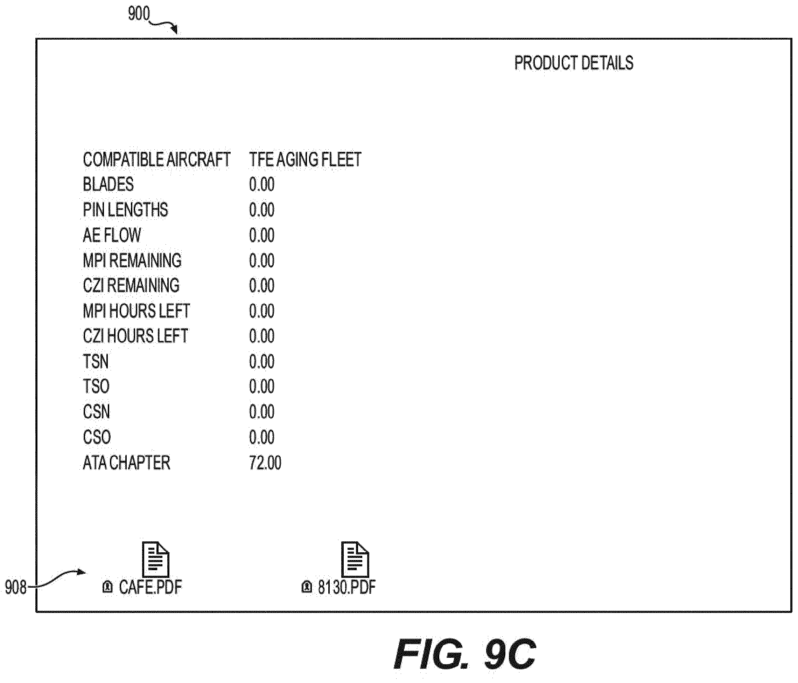

As shown in FIG. 9C, listing details 900 for aerospace parts or vehicle parts may further include life limited part (LLP) detail, time on vehicle until next major or core periodic inspection, and/or total hours on vehicle Listing details may display a single listing of a single equipment per page, as well as relevant details of the equipment. For example, the listings details page may include a large image pane to display images and documents uploaded by the seller. The listing details may further include equipment number, description of the equipment, seller name, seller or equipment reviews, price of the equipment, quantity of the equipment remaining, an "add to cart" button, warranty information for the equipment, and specifications including dimensions and weight of the equipment if available. The images pane may include left or right buttons to allow the user to scroll through multiple images. The recommended alternative and/or similar products feature may include displaying other recommended products and/or equipment, if any, or equipment that is the same but sold through a different seller. The favorites feature may include a "favorite" button, such as an "add to my list" button or heart symbol, such that the listing may be added to a favorites list when the user selects the favorite button. The tag listing as AOG feature may include providing a button that allows the user to tag listings as AOG applicable or to search by AOG delivery.

The organization category may include features to allow users to organize listings. For example, the organization category may include an idea board creation and an idea board sharing. The idea board creation may include providing an option to the user for adding favorites to a new idea board or an existing idea board. Idea board sharing may include receiving a request to share a select idea board from the user and creating an email notification with a link to the idea board to any select email addresses entered by the users.

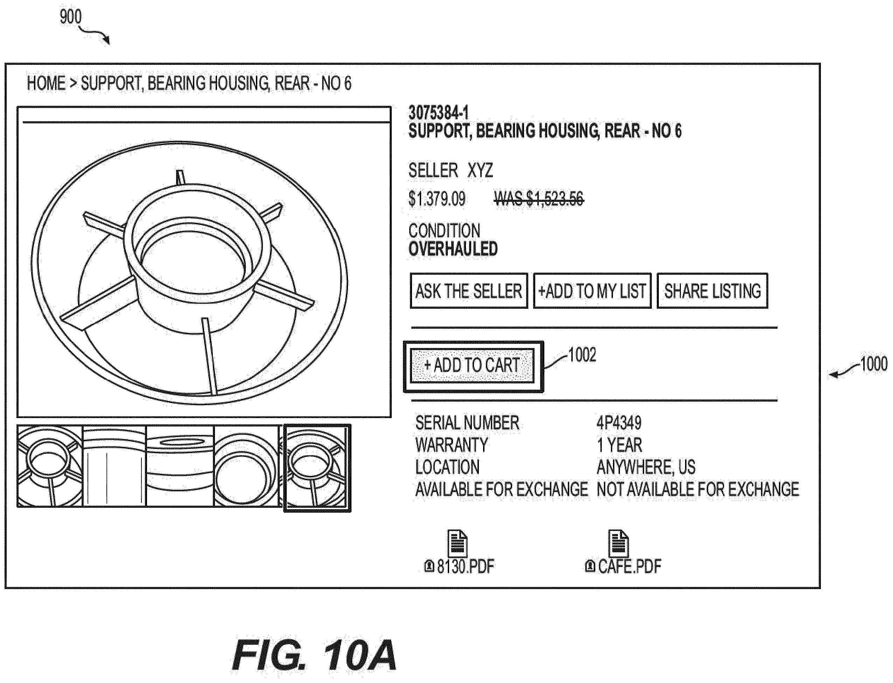

FIGS 10A-10C depict an exemplary cart and checkout feature 1000 of the equipment online marketplace platform 102. As shown in FIG. 10A, the listing detail page 900 may include an add to cart button 1002. If a user desires to purchase the equipment, the user may select the add to cart button 1002 to add the equipment to a shopping cart 1004 on the equipment online marketplace platform 102.

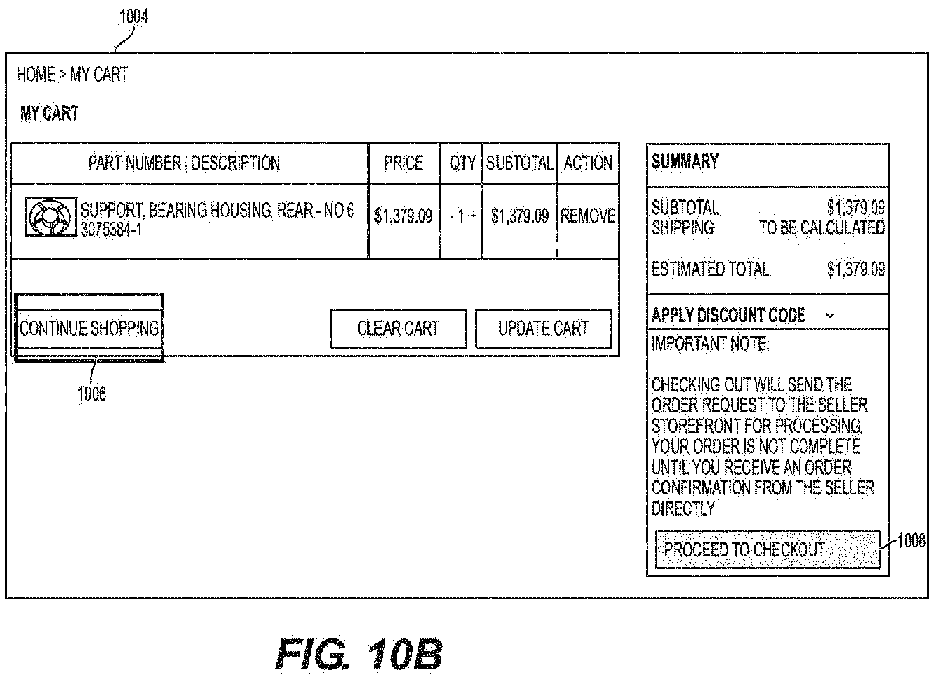

As shown in FIG. 10B, the cart feature 1004 may include a continue shopping button 1006 to return to the search results page 800 to selectively add more equipment items to the cart 1004. The cart feature 1004 may also include a proceed to checkout button 1008 to place the order. The cart feature 1004 may be a conventional online shopping cart that may allow a buyer to store selected items in the cart for purchase at a later time. The shopping cart may stay current in terms of products or services still available at the price when stored.

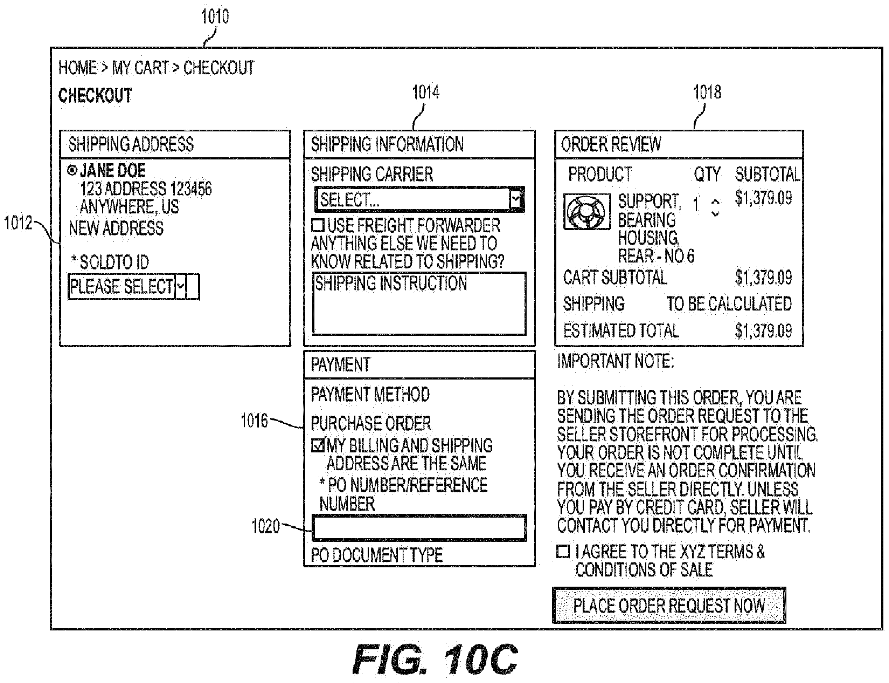

As shown in FIG. 10C, the checkout feature 1010 may enable a user to input information to purchase the equipment item. For example, server 104 may receive the input information via the payment module 210 through the equipment online marketplace platform 102. The checkout page may include input fields such as, for example, a shipping address field 1012, shipping information field 1014, and payment field 1016. The checkout page may also include an order review tile 1018 for displaying summary information of the equipment being purchased. The summary information may include a thumbnail image of the equipment, equipment name, quantity, price of the equipment, cart subtotal, shipping cost, and estimated total of all items in the cart.

Server 104 (via the checkout feature 1010) may receive end use information prior to completing a transaction. For example, the checkout feature 1010 may include input fields to prompt the buyer for the end use information. The end use information may include information about users of the part/assembly, the intended use of the product, and the end use of the product. The users of the part/assembly may include options such as shipping location recipient (e.g., ship to), customer (e.g., company account number), or other (e.g., use this option to add another end user). The intended use of the product may include options such as commercial and/or military. The end use of the product information may include options such as restock, select by aircraft manufacturer/aircraft type, and/or specific aircraft repair. The end use information may be sent to the seller to allow the seller to determine whether the end use information is acceptable.

The equipment online marketplace platform 102 may further include a buyer order dashboard feature, a promotion code/discounts feature, a shipment tracking feature, an electronic order processing feature, terms and conditions feature, an order notification feature, an electronic payment feature, a pay by uploading a purchase order (PO) feature 1020, a request for quote feature, a shopping cart feature, and a buy now feature. The buyer order dashboard may include a summary of the buyer's sales history and order details. The buyer order dashboard may further include a return option to allow the buyer to return equipment. The promotion code/discounts feature may include a promotion code text box displayed at checkout. Promotion codes may include fixed price amounts (e.g., $100 off), a percentage discount off the line item total, a percentage discount off the total order value, a free shipping coupon code, or a free shipping upgrade coupon code.

The shipment tracking feature may enable the seller to provide shipment tracking information to the buyer and the buyer tracking shipment status in real time. The electronic order processing feature may include the ability for all forms of a transaction documentation (e.g., request for quotes, purchase order, special order, special order acknowledgments, invoicing, etc.) to be electronically transmitted and processed through the online marketplace platform 102. The seller may also provide acknowledgment through a seller dashboard portal. The terms and conditions feature may be conventional terms and conditions feature displayed at checkout. A buyer may not be able to proceed to checkout until the buyer agrees to the terms and conditions. The send request for quote to supplier feature may include a request for quote button displayed on the detailed listing page for the equipment. The request for quote feature may allow a buyer to electronically request a price and terms quotation from a seller. The buy now feature may include an automatic acceptance by the seller of an offer by the buyer. The buy now feature may allow the seller to provide a range of prices that would automatically move the transaction forward if an offer from the buyer is made within that range.

The electronic payment feature may enable a buyer to submit an electronic payment at checkout. For example, electronic payment may include credit card or other types of electronic payment, such as PayPal® or the like. The pay by purchase order feature 1020 may allow a buyer to upload a purchase order document at checkout to pay for the order. For example, server 104 may receive a document including information related to a purchase of the equipment via payment module 210 through the equipment online marketplace platform 102. Server 104 may extract the information from the document, process the information, and verify the information in the document. For example, server 104 may use a character recognition code, such as optical character recognition (OCR), to extract the information from the purchase order document. If the information is verified, server 104 may generate an order for the equipment.

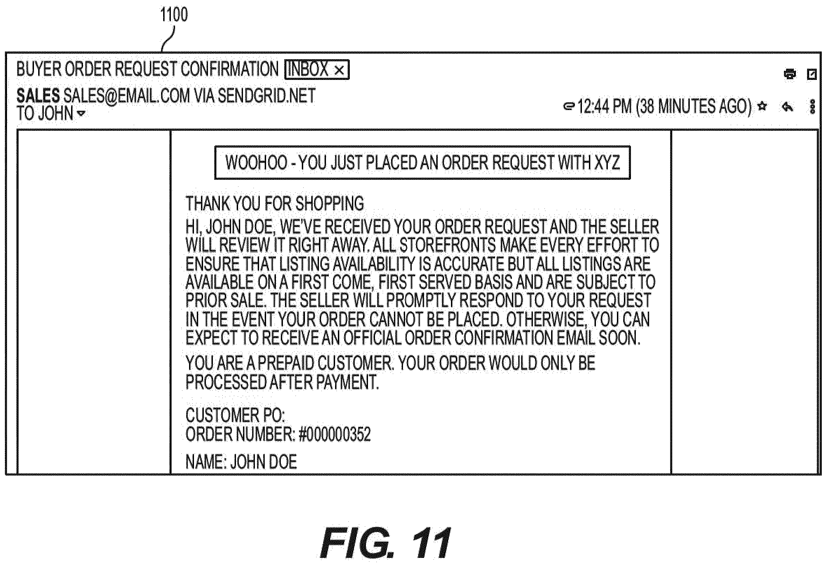

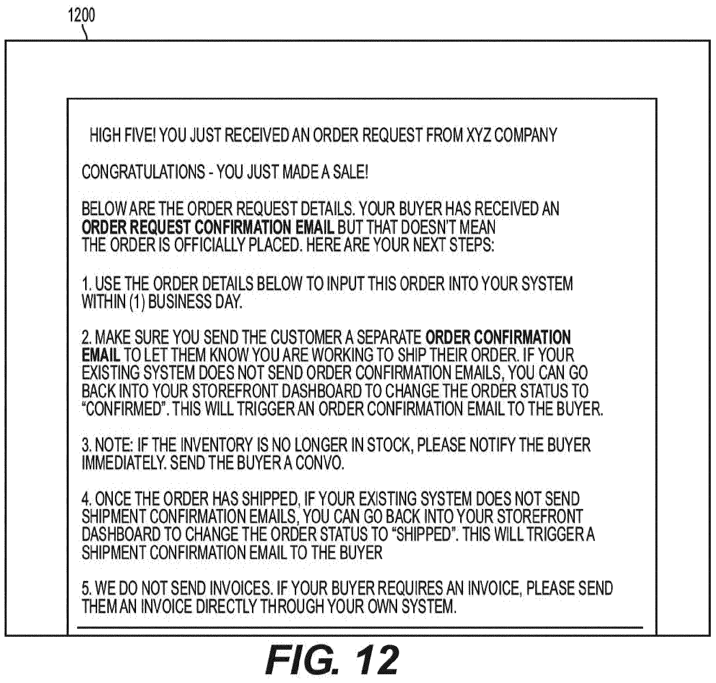

FIGS. 11 and 12 depict an exemplary order notification feature of the equipment online marketplace platform 102. As shown in FIG. 11, the orders notification feature may include a buyer notification feature 1100 (e.g., by email, text message, and/or displayed on the buyer dashboard) to the buyer when the order is submitted. For example, server 104 may send the notification to the buyer via the equipment online marketplace platform 102. The order notification feature 1100 may also provide updates on the shipment of the order. As shown in FIG. 12, the orders notification feature may also include a seller notification feature 1200 (e.g., by email, text message, and/or displayed on a seller dashboard) to the seller when the order is submitted. For example, server 104 may send the notification to the seller via the equipment online marketplace platform 102. The notification to the seller may inform the seller that a sale has been made for the seller's listed equipment.

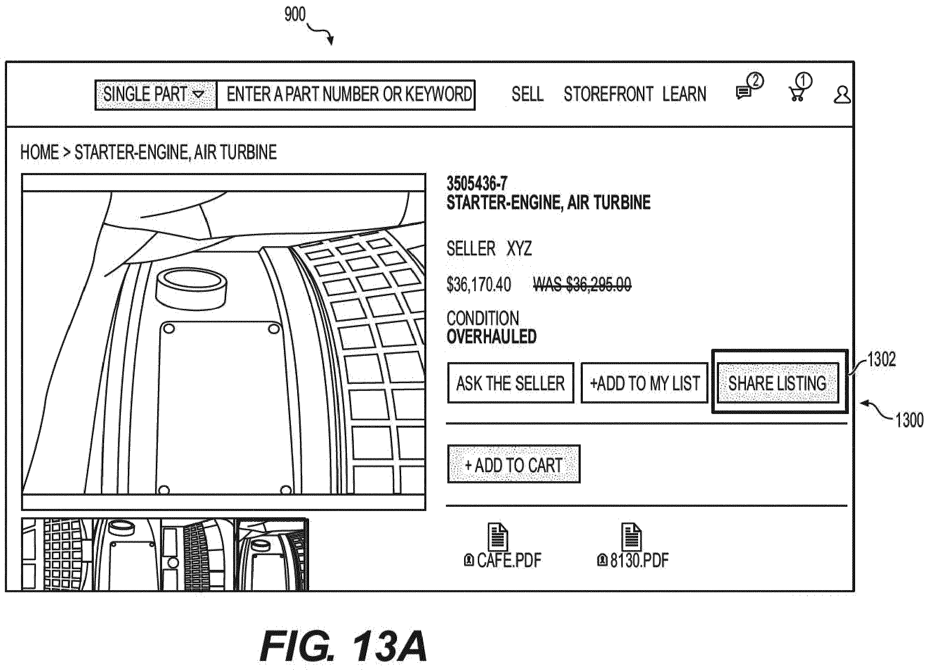

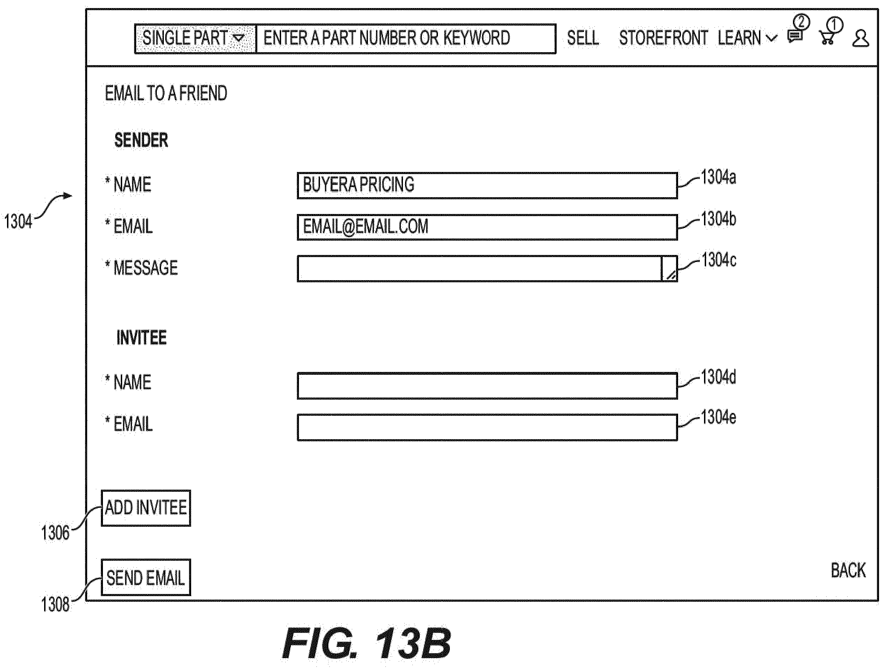

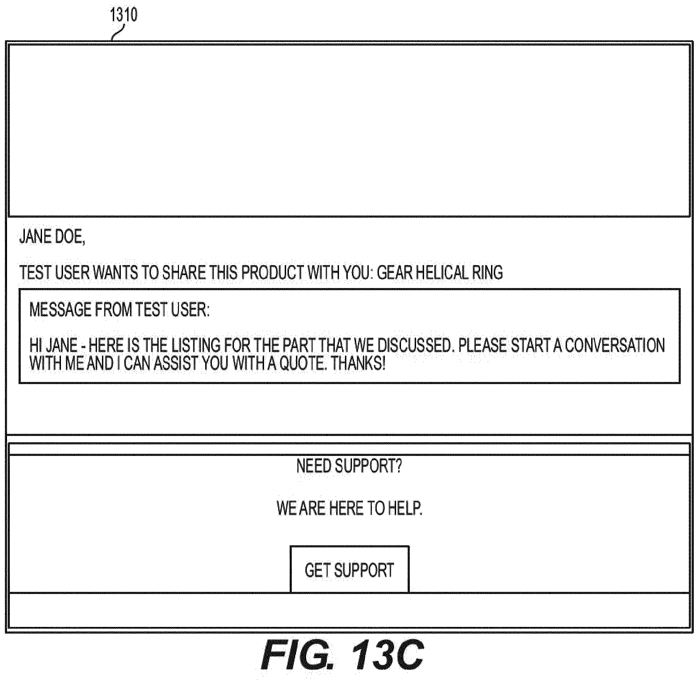

FIGS. 13A-13C depict an exemplary share listing feature 1300 of the equipment online marketplace platform 102. As shown in FIG. 13, the listing details page may further include a share listing button 1302. The share listing feature 1300 may allow a seller to share a listing with a potential buyer by selecting the share listing button 1302. For example, server 104 may receive input from the seller, generate an email including a hyperlink to the listing based on the input, and send the email through the equipment online marketplace platform 102. As shown in FIG. 13B, when a seller selects the share listing button 1302, a page is displayed for generating an email. The page may include fields 1304 for the seller to input information for generating the email to share the listing. The fields 1304 may include, for example, name of sender field 1304a, email address of sender field 1304b, message field 1304c, name of invitee field 1304d, and email address of invitee field 1304e. The page may further include an add invitee button 1306 to add more invitees and a send email button 1308 for sending the generated email including the listing. As shown in FIG. 13C, the invitee may receive the email 1310 with the listing. For example, the email may contain a hyperlink to the listing on the equipment online marketplace platform 102.

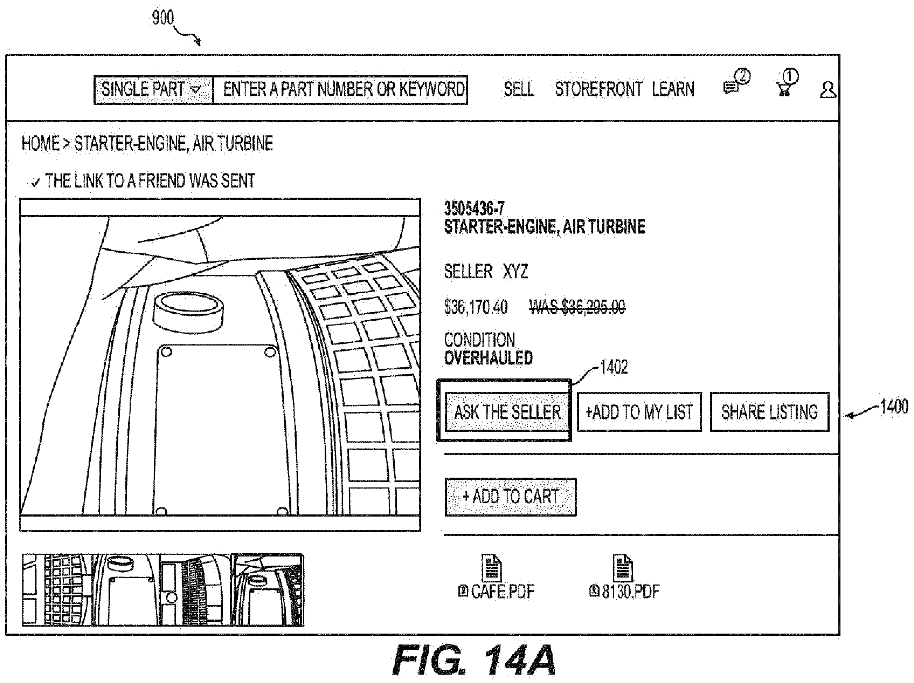

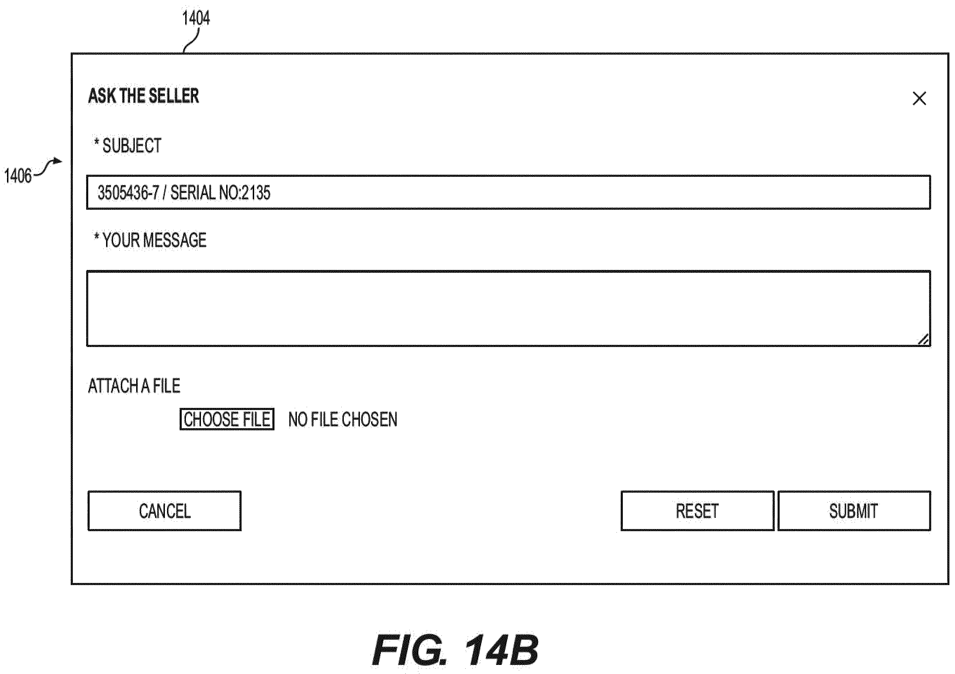

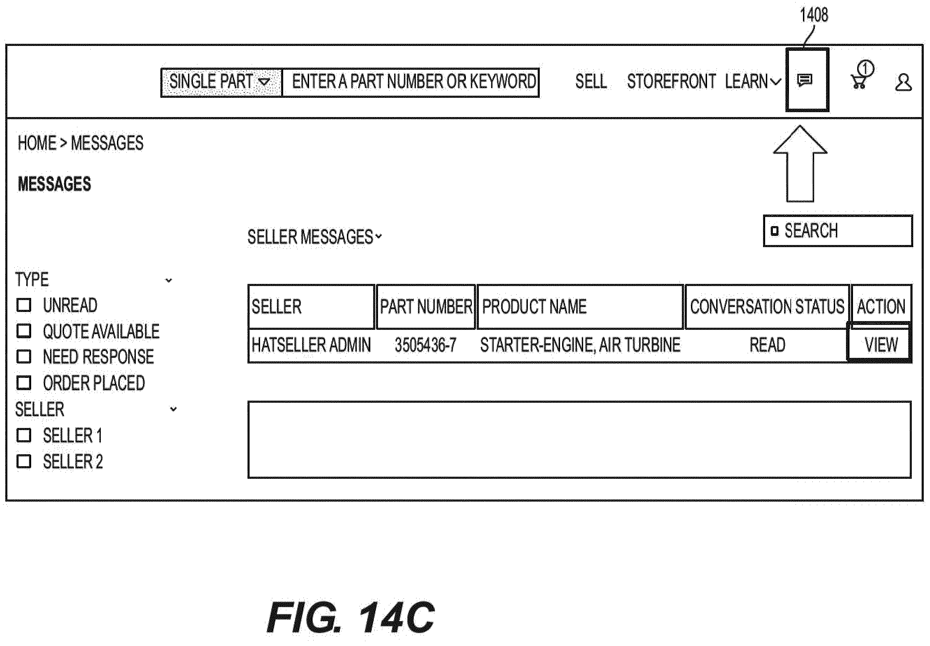

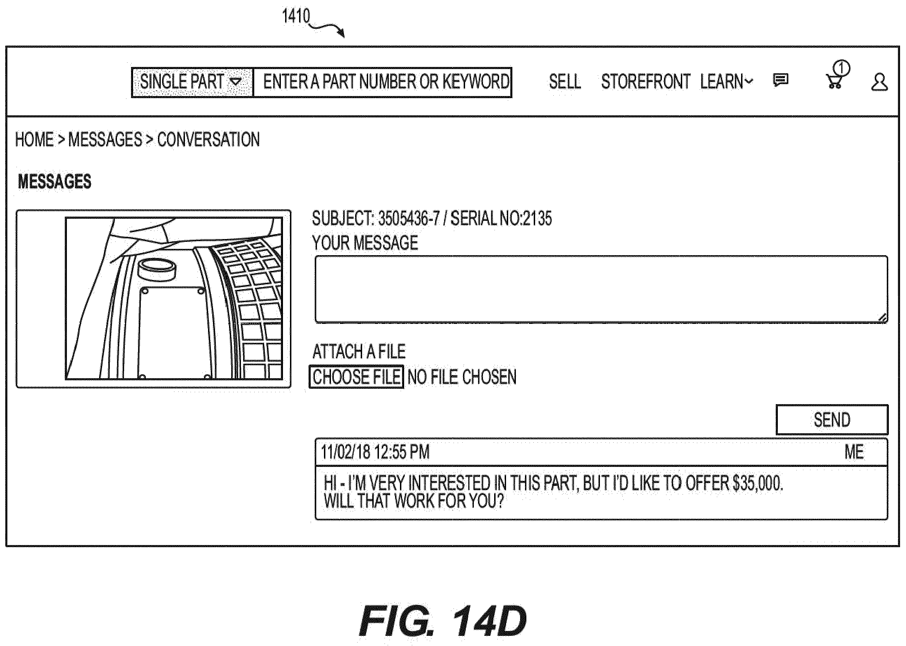

FIGS. 14A-14D depict a conversation feature 1400 for buyers on the equipment online marketplace platform 102. The buyer interface may include a conversation feature. The conversation feature may include buyer communication features. For example, the communication features may include a chat feature and/or a conversation thread feature. The communication features may allow buyers to communicate with sellers through the online marketplace platform 102. As shown in FIG. 14A, the listing details page may include an ask the seller button 1402. The ask the seller button allows buyers to begin a conversation with a seller by selecting the ask the seller button. For example, server 104 may receive input from the buyer to send a message to a desired seller, generate a message based on input from the buyer, and send the message to the desired seller through the equipment online marketplace platform 102. As shown in FIG. 14B, when a buyer selects the ask the seller button 1402, a message page 1404 may be displayed. The message page 1404 may include input fields 1406 to allow the buyer to input a subject and a message. The message page 1404 may also allow a buyer to attach a file. As shown in FIG. 14C, the buyer dashboard may include a messages icon 1408 for viewing messages and/or conversations. As shown in FIG. 14D, when a buyer select a conversation 1410, the conversation and messages in that conversation may be displayed.

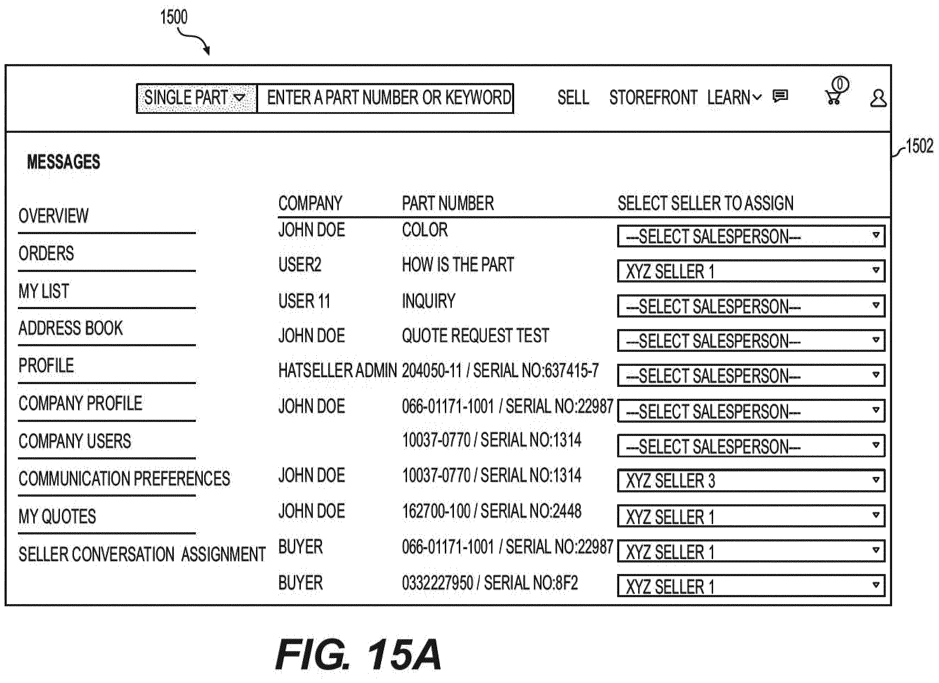

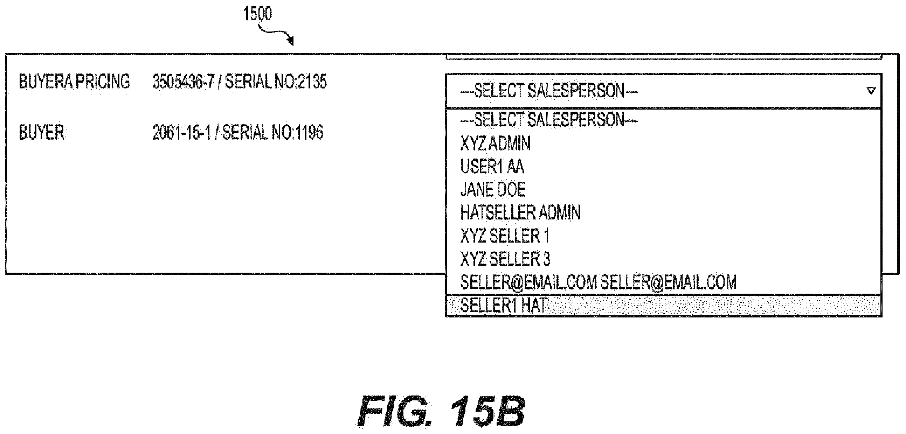

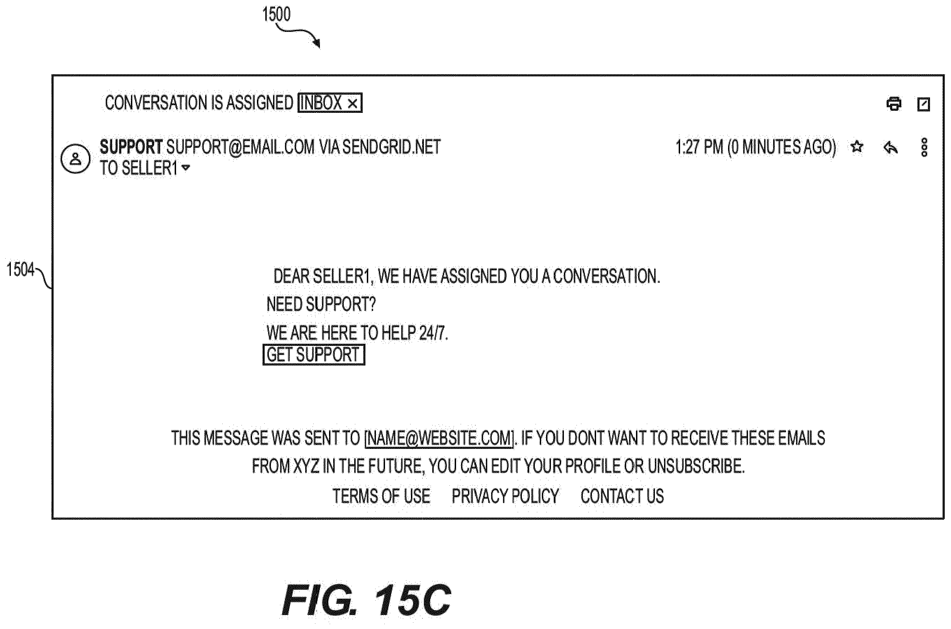

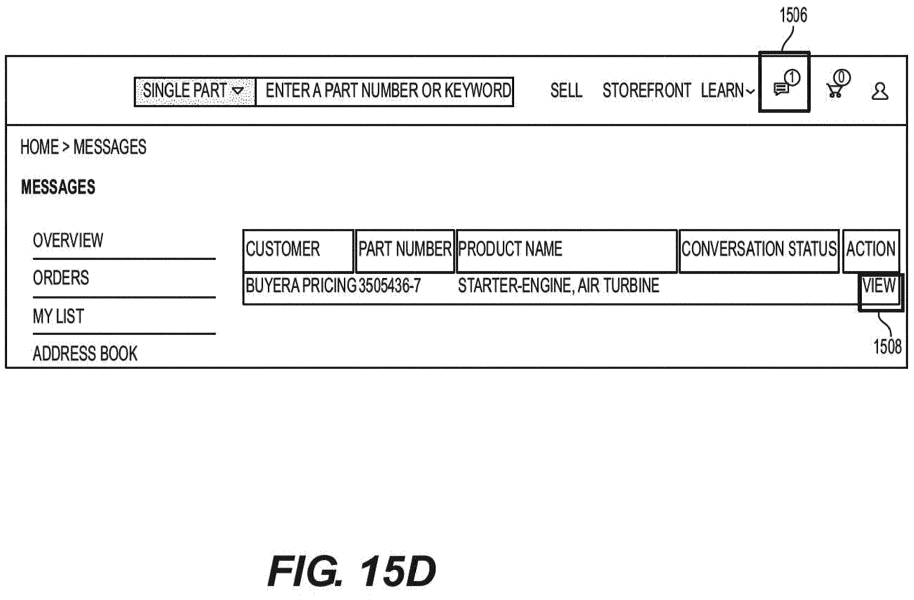

FIGS. 15A-15D depict a conversation feature 1500 for sellers on the equipment online marketplace platform 102. The seller interface may include a conversation feature. The conversation feature may include seller communication features. For example, the communication features may include a chat feature and/or a conversation thread feature. The communication features may allow sellers to communicate with buyers through the equipment online marketplace platform 102. As shown in FIG. 15A, a seller messages page 1502 may display current/open conversations with buyers. As shown in FIG. 15B, conversations may be assigned to a specific salesperson of the seller company. Sellers can assign a super user by manual assignment or the equipment online marketplace platform 102 may automatically assign conversations to the seller salesperson. As shown in FIG. 15C, after the conversation is assigned to a salesperson, the salesperson may receive an email notification 1504 informing the salesperson that a conversation has been assigned to them. As shown in FIG. 15D, the seller salesperson may then sign in to the equipment online marketplace platform 102 and selects a conversations icon 1506. The salesperson may then select view 1508 to view the messages in the conversation.

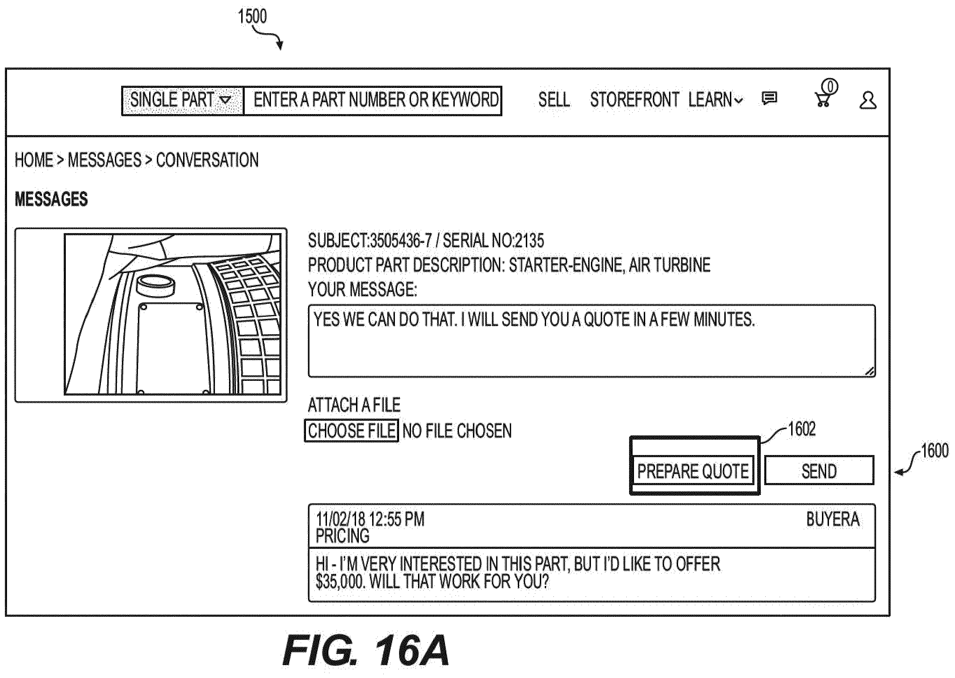

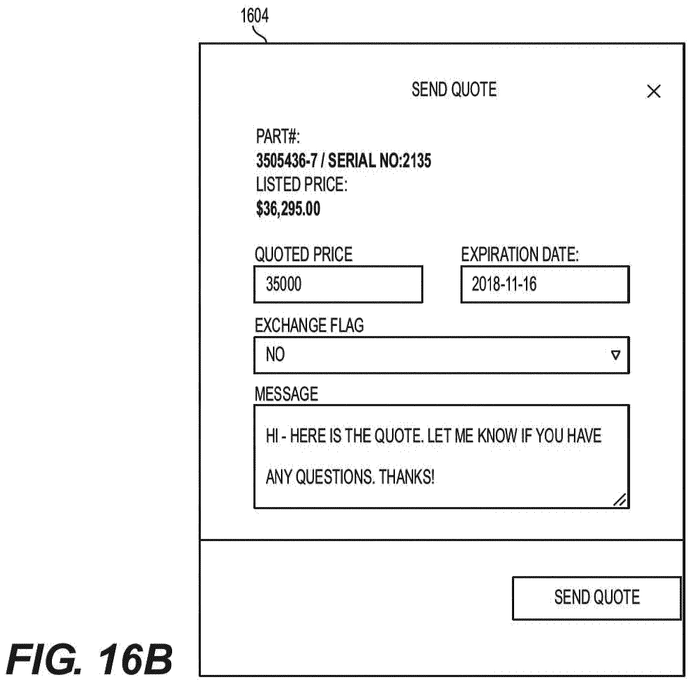

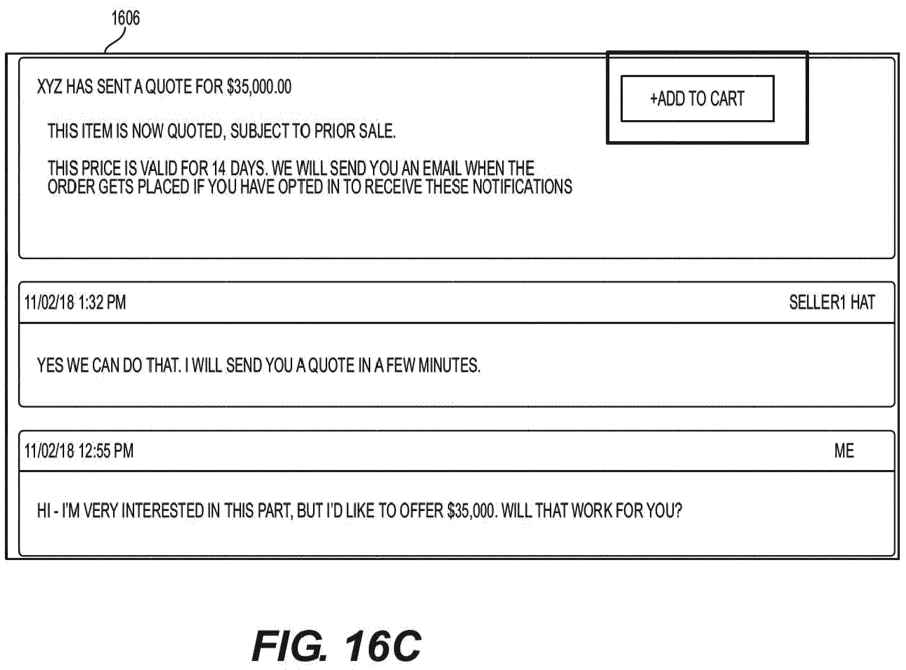

FIGS. 16A-16C depict a seller price quote feature 1600 on the equipment online marketplace platform 102. As shown in FIG. 16A, the conversation feature 1500 may further include a price quote feature 1600. The price quote feature 1600 may allow the salesperson to respond to a request for quote from a buyer. For example, server 104 may receive input from the seller of a price quote, generate a message with the price quote, and send the message with the price quote to a desired buyer. As such, the messages page for the salesperson may include a prepare quote button 1602. As shown in FIG. 16B, when the salesperson selects the prepare quote button 1602, a send quote page 1604 may be displayed to allow the salesperson to input price quote information for the requested equipment. The send quote page 1604 may allow the salesperson to input the quoted price, expiration date of the quoted price, exchange flag, and a message. As shown in FIG. 16C, when the seller sends the price quote, the buyer may receive an email notification 1606 with the price quote. The buyer may then sign in to the equipment online marketplace platform, navigate to their messages, and add the equipment to their cart for purchasing the equipment at the quoted price.

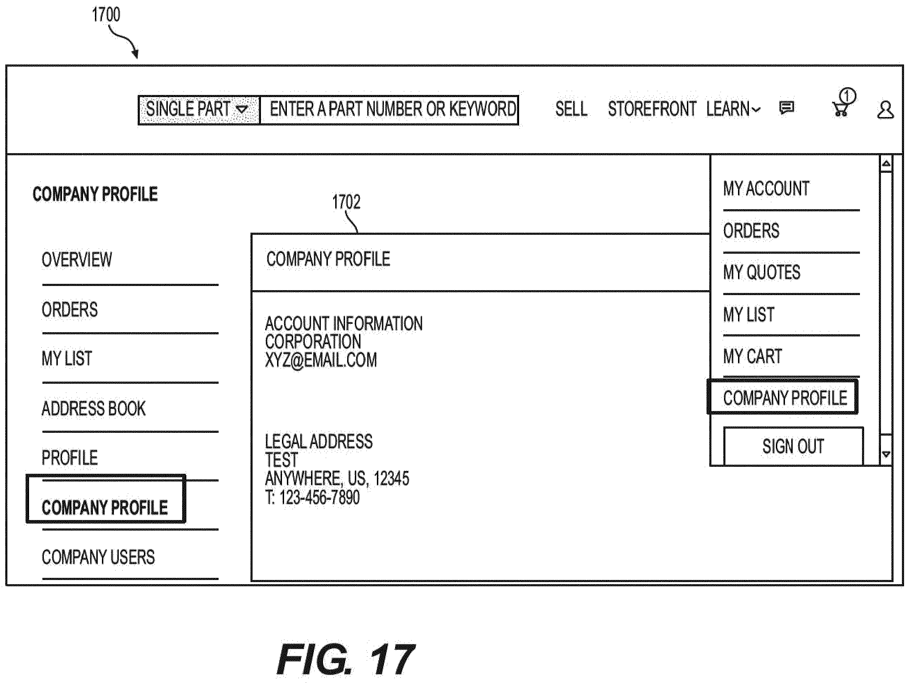

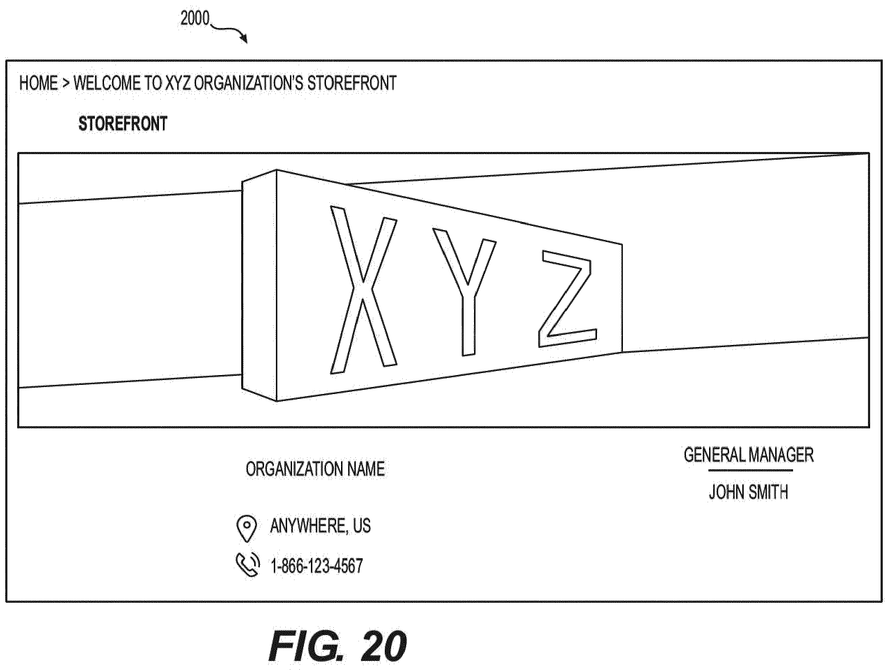

FIGS. 17-20 depict exemplary seller services features of the equipment online marketplace platform 102. The seller services features may include a seller profile development feature 1700. As shown in FIGS. 17 and 20, the seller profile development feature 1700 may include displaying the organization (e.g., company) logo or storefront 2000. The equipment online marketplace platform 102 may allow each company to have a company profile page 1702, viewable to buyers and sellers registered to that company. The storefront page 1702 may include seller contact information (e.g., location, email address, and/or phone number) and an image of the company logo (e.g., XYZ company).

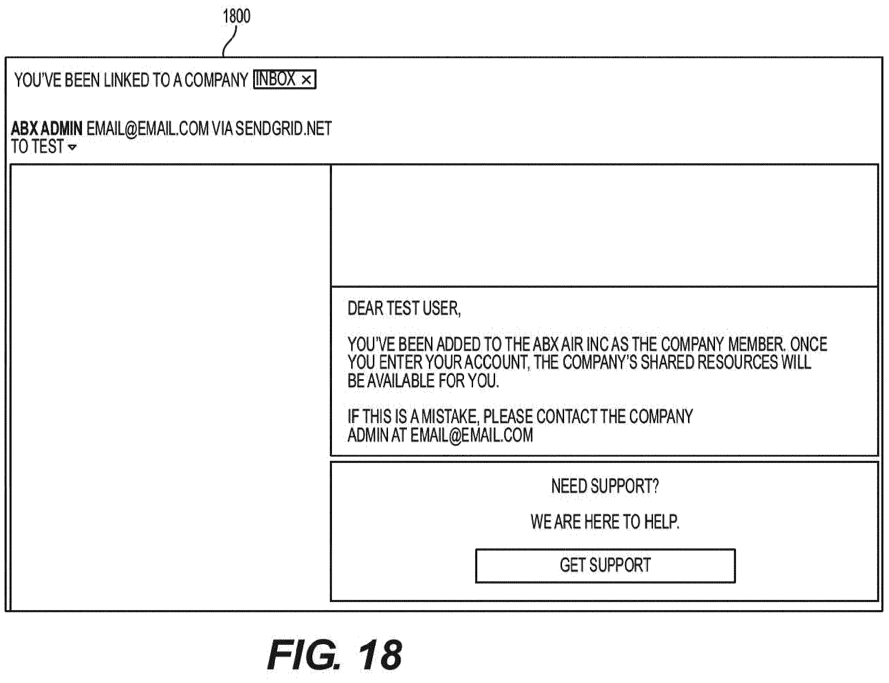

As shown in FIG. 18, the equipment online marketplace platform 102 may enable users to link accounts to the company profile page 1702. For example, when a new user registers on the equipment online marketplace platform 102, the new user may not be linked to a company, but may still have full access to the equipment online marketplace platform 102. The platform 102 administrator may review each new user and link the new user to the appropriate company account for the new user. When the user is linked to the company account, the user may receive an email notification 1800. For example, server 104 may receive a request from a new user to link to a company account, verify the new user is a member of the company, link the new user to the company account, and send the email notification 1800 when the new user is linked to the company account.

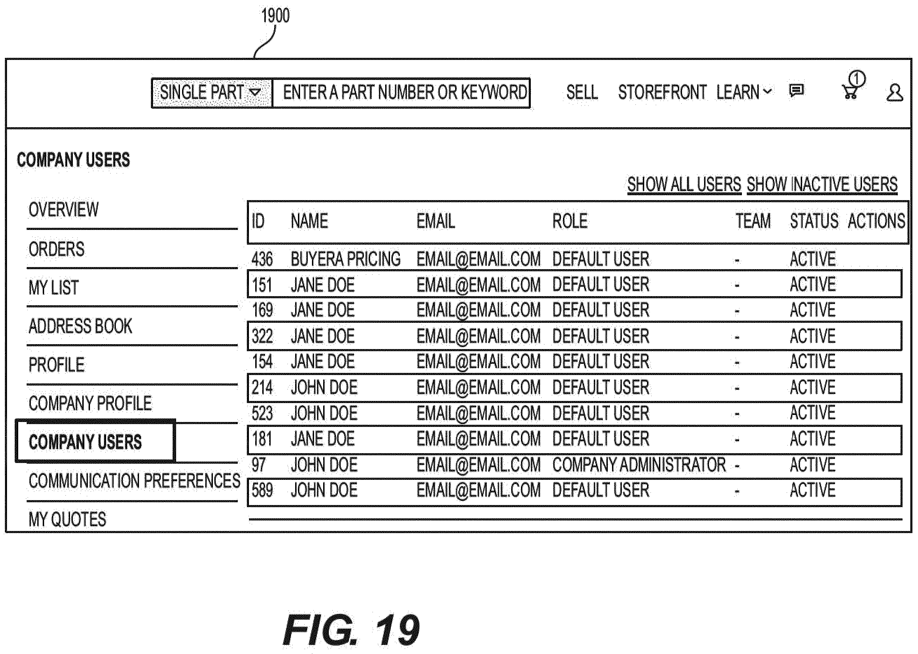

As shown in FIG. 19, the equipment online marketplace platform 102 may include a company users page 1900 for displaying a list of any and all company users associated with the company. For example, server 104 may display the list of company users via the equipment online marketplace platform 102. Users that have been linked to the company may be able to view the company users. The list of company users may include an ID number, name, email address, role, team, status, and actions for each company user.

Other seller services features may include an upload listings by spreadsheet feature, a seller pricing feature, a seller promotion code/coupon generation feature, an equipment online marketplace platform promotion code/coupon generation feature, an application to upload listings feature, and a seller dashboard feature. The upload listings by spreadsheet feature may include a seller placing verified listings by uploading a spreadsheet to automatically create the listing. The spreadsheet may be, for example, an Excel® spreadsheet, a Numbers® spreadsheet, or any other type of spreadsheet. The seller pricing feature may include allowing sellers to set a list price for the equipment and a sales price if applicable. The sales price may appear in a different color (e.g., red) than the list price to highlight the sales price.

The seller promotion code/coupon generation feature may include allowing sellers to generate promotion codes with various discounts. Promotion codes may include fixed price amounts (e.g., $100 off), a percentage discount of the total order value, a free shipping coupon code, and/or a free shipping upgrade coupon code. The equipment online marketplace platform promotion code/coupon generation feature may include the online marketplace platform (e.g., Honeywell's GoDirect Trade aerospace equipment marketplace) generating promotion codes with various discounts. The promotion codes may be fixed price amounts (e.g., $100 off), a percentage discount of the total order value, a percentage discount of the line item total, a free shipping coupon code, or a free shipping upgrade coupon code. The equipment online marketplace platform may bear the cost of the promotion/discount.

The application to upload listings feature may include a mobile application for a mobile computing device that may enable sellers to take a picture of the equipment and any associated forms for the equipment. The mobile application may automatically upload the images to the online marketplace platform 102 and create a listing based on the images. For example, server 104 may receive the images, extract information from the images, and generate a listing for the equipment based on the information in the images. The seller dashboard feature may include an activity dashboard for displaying metrics and information on key activities of the seller. The metrics and information on key activities may include process tracking, an events handling mechanism for the transacting partners to better track progress, milestones, metrics, or any other information that may be relevant to the seller. The company directory page may include a directory of company employee information for sellers.

The account profile management category may include an account and communication preferences feature. The account and communication preferences feature may allow users to edit various settings on their profile (including specific communication methods within the account profile settings).

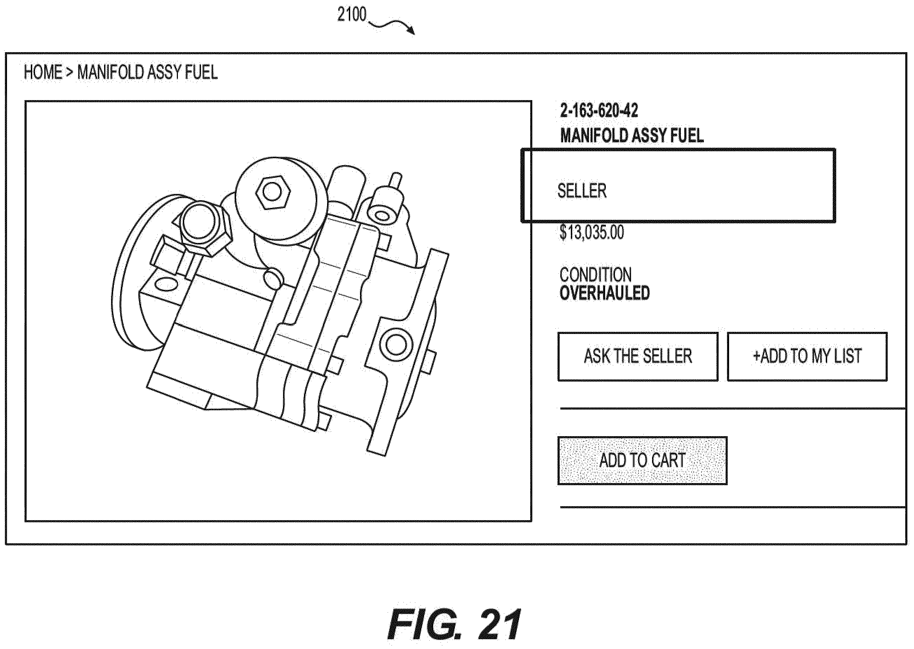

FIG. 21 depicts an exemplary ratings feature 2100 on the equipment online marketplace platform 102. The ratings feature 2100 may include a buyer/seller/website feedback and ratings feature. For example, server 104 may receive input from a user of feedback and ratings, and display the feedback and ratings via the equipment online marketplace platform 102. The buyer/seller/website feedback and ratings feature may allow buyers and sellers to provide feedback to each other after completion of a transaction. Feedback and ratings may be used for disciplinary actions and/or rewarding loyalty. The rating system may include a 5-star rating. The ratings feature may also include an easy way to see all order in a history screen and rate the transactions.

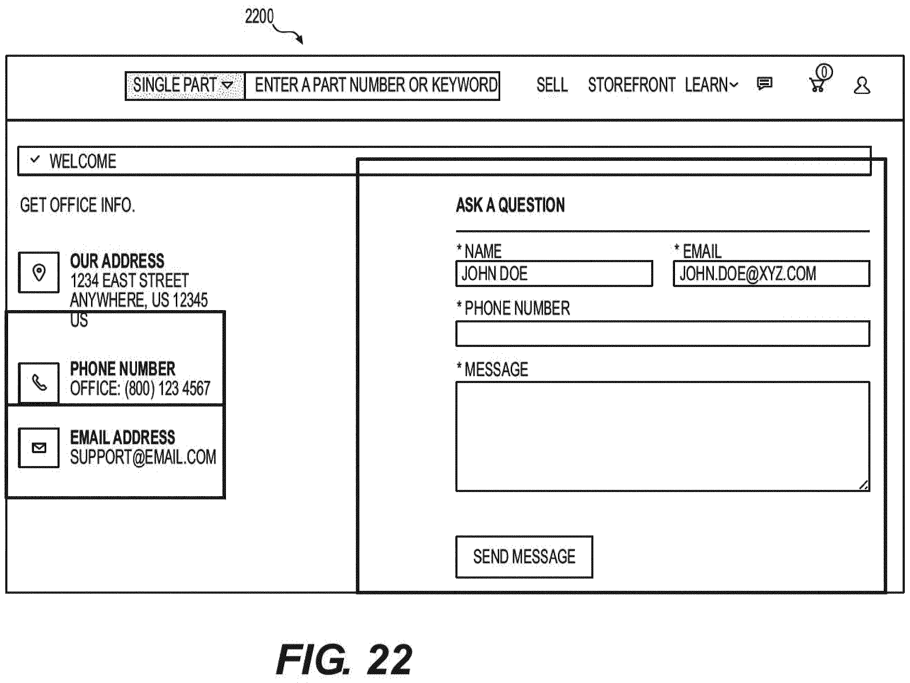

FIG. 22 depicts an exemplary technical support feature 2200 on the equipment online marketplace platform 102. The technical support feature 2200 may include a contact us page feature. For example, server 104 may receive input from a user indicating the user desires to contact technical support and connect the user to technical support through email or telephone via the equipment online marketplace platform 102. The contact us page feature may include a page on the equipment online marketplace platform 102 for contacting technical support with technical issues with the platform operation or use. For example, users may contact technical support by live chat, phone, or email. The technical support feature may further include input fields for inputting and submitting a message for sending to technical support. The input fields may include name, email address, phone number, and message.

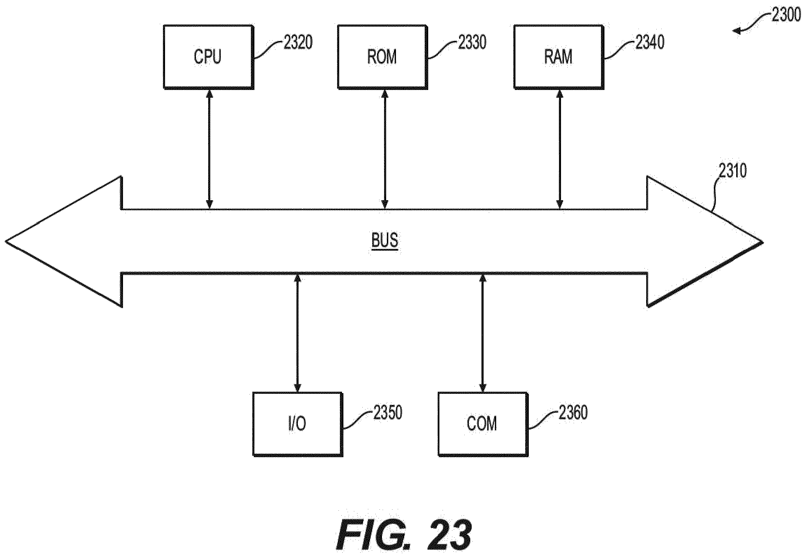

FIG. 23 depicts a high-level functional block diagram of an exemplary computer device or system, in which embodiments of the present disclosure, or portions thereof, may be implemented, e.g., as computer-readable code. For example, each of the exemplary systems, user interfaces and methods described above with respect to FIGS. 1-22 can be implemented in device 2300 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-22.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-22 may be implemented using device 2300. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

As shown in FIG. 23, device 2300 may include a central processing unit (CPU) 2320. CPU 2320 may be any type of processor device including, for example, any type of special purpose or a general-purpose microprocessor device. As will be appreciated by persons skilled in the relevant art, CPU 2320 also may be a single processor in a multi-core/multiprocessor system, such system operating alone, or in a cluster of computing devices operating in a cluster or server farm. CPU 2320 may be connected to a data communication infrastructure 2310, for example, a bus, message queue, network, or multi-core message-passing scheme.

Device 2300 may also include a main memory 2340, for example, random access memory (RAM), and may also include a secondary memory 2330. Secondary memory 2330, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 2330 may include other similar means for allowing computer programs or other instructions to be loaded into device 2300. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 2300.

Device 2300 may also include a communications interface ("COM") 2360. Communications interface 2360 allows software and data to be transferred between device 2300 and external devices. Communications interface 2360 may include a modem, a network interface (such as an Ethernet card), a communications port, a PCMCIA slot and card, or the like. Software and data transferred via communications interface 2360 may be in the form of signals, which may be electronic, electromagnetic, optical, or other signals capable of being received by communications interface 2360. These signals may be provided to communications interface 2360 via a communications path of device 2300, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 2300 also may include input and output ports 2350 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for facilitating equipment transactions through an equipment online marketplace platform, the method comprising:
hosting, by a server, the equipment online marketplace platform through a network such that users can access the equipment online marketplace platform through the network;
verifying, by the server, identities of new users of the equipment online marketplace platform to generate verified users;
enabling, by the server, verified users to create listings for equipment on the equipment online marketplace platform;
when a verified user creates a listing for equipment, determining, by the server, whether the verified user has access to the equipment in the created listing by requiring the user to upload one or more images or documents of the equipment through the equipment online marketplace platform;
generating, by the server, the verified user's listing for the equipment on the equipment online marketplace platform when the verified user is determined to have access to the equipment; and
displaying, by the server, the generated listing for the equipment on the equipment online marketplace platform such that other verified users can view the posted listing and conduct electronic transactions involving the equipment in the listing through the equipment online marketplace platform.

2. The method of claim 1, wherein the verifying identities of new users of the equipment online marketplace platform to generate verified users includes:
sending, by the server, a message with a verification hyperlink to a respective new user;
verifying, by the server, an identity of the respective new user when the respective new user opens the hyperlink; and
generating, by the server, a verified new user by storing the verified identity of the respective new user in a shared database.

3. The method of claim 1, further comprising:
enabling, by the server, organizations to register as a new user on the equipment online marketplace platform; and
enabling, by the server, individuals to register as a new user on the equipment online marketplace platform.

4. The method of claim 3, wherein the verifying identities of new users of the equipment online marketplace platform to generate verified users further includes:
receiving, by the server, identity information of the new user;
determining, by the server, whether the new user is associated with an organization that is registered with the equipment online marketplace platform based on the received identity information of the new user;
if the new user is associated with an organization that is registered with the equipment online marketplace platform, associating, by the server, the new user to the organization by linking a new user account to the organization through the equipment online marketplace platform after the identity of the new user has been verified; and
if the new user is not associated with an organization that is registered with the equipment online marketplace platform, enabling, by the server, the new user to conduct electronic transactions involving the equipment the equipment online marketplace platform independently from any organizations after the identity of the new user has been verified.

5. The method of claim 4, wherein the received identity information of the new user includes a country of residence for the new user;
wherein the verifying identities of new users of the equipment online marketplace platform to generate verified users further includes:
comparing, by the server, the country of residence for the new user to a list of countries that are embargoed; and
if the country of residence for the new user matches a country on the list of countries that are embargoed, blocking, by the server, from accessing the equipment online marketplace platform.

6. The method of claim 4, the verifying identities of new users of the equipment online marketplace platform to generate verified users further includes:
comparing, by the server, the received identity information of the new user to identity information in one or more governmental databases; and
if the received identity information of the new user matches identity information in the one or more governmental databases, blocking, by the server, the new user from accessing the equipment online marketplace platform.

7. The method of claim 1, wherein the uploaded one or more images or documents of the equipment for determining that the user has access to the equipment includes at least one image of the equipment, quality information from one or more quality documents for the equipment, and pricing information for the equipment.

8. The method of claim 7, wherein the generated listing includes the at least one image of the equipment, the one or more quality documents for the equipment, and the pricing information for the equipment.

9. The method of claim 1, wherein the equipment includes aircraft and aerospace parts.

10. A computer system for facilitating equipment transactions through an equipment online marketplace platform, the computer system comprising:
a memory having processor-readable instructions stored therein; and
at least one processor configured to access the memory and execute the processor-readable instructions, which when executed by the at least one processor configures the at least one processor to perform a plurality of functions, including functions for:
hosting, by a server, the equipment online marketplace platform through a network such that users can access the equipment online marketplace platform through the network;
verifying, by the server, identities of new users of the equipment online marketplace platform to generate verified users;
enabling, by the server, verified users to create listings for equipment on the equipment online marketplace platform;
when a verified user creates a listing for equipment, determining, by the server, whether the verified user has access to the equipment in the created listing by requiring the user to upload one or more images or documents of the equipment through the equipment online marketplace platform;
generating, by the server, the verified user's listing for the equipment on the equipment online marketplace platform when the verified user is determined to have access to the equipment; and
displaying, by the server, the generated listing for the equipment on the equipment online marketplace platform such that other verified users can view the posted listing and conduct electronic transactions involving the equipment in the listing through the equipment online marketplace platform.
